# EUROPEAN PATENT APPLICATION

(11) **EP 1 880 903 A1**
(43) Date of publication of application: **23.01.2008**
(21) Application number: 06745952.9
(22) Date of filing: 01.05.2006
(51) Int. Cl.: B60R 11/02, B60R 16/02, G09F 9/00, H04N 5/64

(54) **ELECTRONIC APPARATUS**

(30) Priority: 09.05.2005 JP 2005135603; 10.05.2005 JP 2005137456; 27.05.2005 JP 2005155696; 20.06.2005 JP 2005178904; 29.08.2005 JP 2005247423
(71) Applicant: FUJITSU TEN LIMITED, Kobe-shi Hyogo 652-8510 (JP)
(72) Inventor: EGUCHI, Takashi c/o FUJITSU TEN LIMITED, Kobe-shi, Hyogo 6528510 (JP); OTANI, Masatoshi c/o FUJITSU TEN LIMITED, Kobe-shi, Hyogo 6528510 (JP); SHIMIZU, Yukio c/o FUJITSU TEN LIMITED, Kobe-shi, Hyogo 6528510 (JP); MOTOYAMA, Kaede c/o FUJITSU TEN LIMITED, Kobe-shi, Hyogo 6528510 (JP); KAMIKAWA, Noriyuki c/o FUJITSU TEN LIMITED, Hyogo 6528510 (JP); KUKIMOTO, Osamu c/o FUJITSU TEN LIMITED, Kobe-shi, Hyogo 6528510 (JP); NAKANO, Masahiko c/o FUJITSU TEN LIMITED, Hyogo 6528510 (JP); NAKAMURA, Humitake c/o FUJITSU TEN LIMITED, Hyogo 6528510 (JP)
(74) Representative: Ward, James Norman
(86) International application number: PCT/JP2006/309101
(87) International publication number: WO 2006/120963

(57) **Abstract**

There are provided a display panel mounted in a tiltable manner on the front face portion of a main body portion, an operation panel to be mounted in a tiltable manner on the display panel, a tilt control part for controlling to tilt the display panel in response to a first tilt command and to tilt the operation panel in response to a second tilt command, and a memory part for storing inclination angle information of the operation panel corresponding to the inclination angle of the display panel. The tilt control part tilts the display panel in response to the first tilt command, and also tilts the operation panel based on the inclination angle information of the operation panel stored in the memory part.

## Description

### CROSS REFERENCE TO RELATED APPLICATIONS

This application is a continuation of International Application No.PCT/JP2006/309101, filed on May 1, 2006, now pending, herein incorporated by reference. Further, this application is based upon and claims the benefit of priority from the prior Japanese Patent Application No. 2005-135603, filed on May 9, 2005, the prior Japanese Patent Application No. 2005-137456, filed on May 10, 2005, the prior Japanese Patent Application No. 2005-155696, filed on May 27, 2005, the prior Japanese Patent Application No. 2005-178904, filed on June 20, 2005, and the prior Japanese Patent Application No. 2005-247423, filed on August 29, 2005, the entire contents of which are incorporated herein by reference.

### FIELD OF THE INVENTION

The present invention relates to an electronic apparatus for mounting on a vehicle or the like, of which display panel, etc. are controlled to be inclined (tilted), and more particularly an electronic apparatus having an operation panel ACP mounted on a display panel in a tiltable manner, in which control, etc. are performed to make the tilt angle of the above operation panel correspond to the tilt angle of a display panel.

### BACKGROUND ARTS

### (First conventional art)

As an onboard electronic apparatus in recent years, the use of an audio-visual navigation unit (hereafter referred to as AVN unit) having car audio unit, television receiver unit and car navigation unit integrated therein is becoming widespread. In general, such the AVN unit is embedded in an instrument panel in front of the driver seat of a vehicle. Accordingly, the AVN unit is constituted of a main body portion, having electronic devices housed therein to realize a variety of functions, and a display panel provided on the front face side of the main body portion. The main body portion is embedded in the instrument panel, while the display panel on the front face side is accommodated on the same face as the surface of the instrument panel. Further, a touch panel is also provided on the display panel, and by displaying operation buttons on the display panel, a variety of operations can be made.

The above-mentioned AVN unit is required to minimize the area of the display panel by receiving the restriction from the instrument panel. Meanwhile, to cope with the multifunctionality of the AVN unit, it is required to enlarge the display panel area, as well as to provide together the operation panel having operation buttons.

In order to satisfy such the contradictory requirements, it has been proposed to mount the operation panel capable of rotation motion control on the lower end of the display panel, so as to be overlaid on the display panel by closing the operation panel when the power is off, to enable the operation panel to be opened or closed corresponding to the user operation when the power is on, thereby to enlarge the display panel screen while the operation panel is in an open state. For example, the above proposal is shown in FIGS. 10 and 11 of the following patent document 1.

### (Second conventional art)

The onboard electronic apparatus in recent years has a trend that an entertainment aspect to make driving more enjoyable is also required, not only the navigation function to provide information including vehicle routes and the road status. Accordingly, an audio-visual navigation unit [hereafter referred to as AVN (Registered Trademark) unit], having car audio unit, television receiver unit and car navigation unit integrated therein, is coming into widespread use.

In such the AVN unit, operation functions tend to be increasingly built in, making the operation more complicated, and accordingly, a variety of proposals have been made to provide a multiplicity of operation functions within a limited area of the instrument panel disposed in front of the vehicle driver seat.

For example, as shown in Patent document 2, it has been proposed that an operation panel capable of rotation motion control, having operation buttons for a variety of functions, is mounted on the lower end of the display panel which is disposed on the front face side of the main body portion of the AVN unit, and the operation panel is opened and closed corresponding to the power supply and a user operation, and the operation panel is made operable in the open state thereof. Further, as shown in Patent document 3, a plurality of operation panels moving back and forth on the front face of a main body portion are mounted with a movable arm, and by tilting the arm of the operation panel positioned in front corresponding to the power supply and a user operation, an operation panel hidden on the back is exposed, so as to be made operable.

### (Third conventional art)

There has been a known onboard electronic apparatus, having an audio function and a navigation function, to be mounted on a vehicle, etc. The main body of the electronic apparatus is embedded in a console box, etc. provided on, for example, the dashboard of the vehicle, and a display unit, such as a liquid crystal display, and an operation panel are disposed in the direction facing a driver (operator).

Also, there are cases that the electronic apparatus includes a drive mechanism enabling a display unit and an operation panel to move according to the use state thereof. For example, there have been known a mechanism that the display unit fitted into a vertical state is slid forward when the electronic apparatus becomes an ON state from an OFF state, a mechanism that a display unit, which is housed in the main body in a horizontal state during an OFF state, is slid forward, rotated and raised to a vertical state when being switched to an ON state, and so forth.

It is also possible to form such the movable mechanism in the electronic apparatus with a structure capable of moving to a preset position, with variable control of a moving amount (or rotating amount) thereof so as to move to an optimal position to an operator, according to the body shape of the operator (stature, etc.) or a taste.

As to the drive mechanism for moving the display unit and the operation panel of the electronic apparatus, for example, by use of a sliding variable resistor (linear sensor) as a position sensor, the actuator of the position sensor concerned is engaged to the display unit and the operation panel. When the operation panel is moved (or rotated) by the driving force of a motor, the actuator slides and moves in response to the movement (or rotation) of the operation panel, causing the variation of an output resistance value of the sliding variable resistor. Based on the varied resistance value, the operation panel position is detected, and the operation panel is moved to the predetermined position.

More specifically, for example, when using a structure such that the actuator of the sliding variable resistor is slid an equal length cooperatively with the sliding movement of the operation panel, the moving amount of the actuator becomes large when the sliding amount of the operation panel is relatively large, which inevitably causes the sliding variable resistor to be large in size.

In order to solve the aforementioned problem, in Patent document 4 shown below, there has been disclosed a position detection mechanism to reduce the sliding amount of the actuator as compared with the moving amount of the operation panel, by providing a spiral-shaped groove on a drive shaft for moving the operation panel, and by engaging the actuator of the sliding variable resistor with the above groove.

### (Fourth conventional art)

There has been a known onboard electronic apparatus to be mounted on a vehicle, etc. having an audio function and a navigation function. The main body of the onboard electronic apparatus is embedded in a console box, etc. provided on, for example, the dashboard of the vehicle, and a display unit, such as a liquid crystal display, and an operation panel are disposed in the direction facing a driver (operator).

As an exemplary structure of the electronic apparatus, there is a structure having a main body portion, a display panel having a display disposed on a front face portion, and an operation panel having an operation panel face.

For example, in Patent document 5 shown below, there is disclosed a structure in which an operation panel having a sub-display and an operation switch is mounted so as to be capable of being opened and closed relative to a display panel around an axis disposed on the side of the display panel. Also, in Patent document 6 shown below, an operation panel having an operation switch, etc. is mounted on the display front face of a display panel, slidably on the display panel.

### (Fifth conventional art)

There has been a known onboard electronic apparatus to be mounted on a vehicle, etc. having an audio function and a navigation function. The main body of the onboard apparatus is embedded in a console box, etc. provided on, for example, the dashboard of the vehicle, and a display unit, such as a liquid crystal display, and an operation panel are disposed in the direction facing a driver (operator).

There is an onboard apparatus in which a touch panel display is adopted as a display. The touch panel display includes an input function (touch panel function) enabling a predetermined operation by directly touching with finger or pen a display having a screen on which pictures and characters are displayed. The above input function is realized by disposing, for example, a panel (touch panel) referredto as resistance film on the screen, and by pre s sing the panel with finger or pen, the contact onto the screen is recognized. The resistance film has a structure constituted of a glass substrate and a transparent film, with an electric circuit wired on the X-direction and the Y-direction via a gap called spacer, and when the film is depressed with a finger, etc., the wiring on the depressed portion becomes short-circuited, causing the variation of a voltage value, and thus, the depressed position is detected.

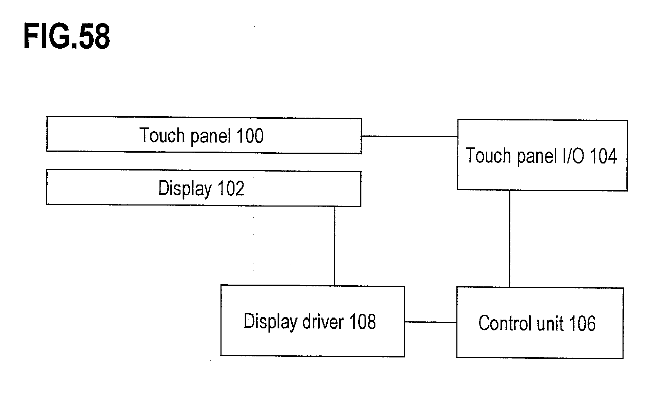

FIG. 58 shows a diagram explaining the structure of the touch panel display. A touch panel 100 is disposed on the screen of a display 102, and the position of touch panel 100 being depressed is detected by a touch panel I/O 104, and then the detected position is transmitted to a control unit 106 such as a CPU. Further, control unit 106 obtains display information corresponding to the detected position from a display driver 108, and executes predetermined control on the basis thereof.

The touch panel display has a merit that easy operation is obtainable only by directly touching a display portion of the screen, as well as a merit of enabling space saving because no space is required for operation buttons since the screen and the input function portion can be integrated. Accordingly, the use of the touch panel display is becoming widespread for onboard apparatuses having limited installation space.

Meanwhile, in case a map or the like is displayed on the screen by part of the navigation function of the onboard apparatus, it is desired to display the map in as wide an area as possible, but if a display portion for input operation by touching the screen with a finger, etc. is displayed, the display area for the map, etc. becomes narrower by that amount. In order to secure a wide display area, for example, in Patent document 7 shown below, there is disclosed an onboard apparatus having two displays including a main display and a sub-display.

Patent document 1 : the official gazette of the Japanese Patent Application Laid-open No. 2005-17968.

Patent document 2: the official gazette of the Japanese Patent Application Laid-open No. 2005-17968.

Patent document 3: the official gazette of the Japanese Patent Application Laid-open No. 2004-234836.

Patent document 4: the official gazette of the Japanese Patent Application Laid-open No. 2000-313284.

Patent document 5: the official gazette of the Japanese Patent Application Laid-open No. 2001-118369.

Patent document 6: the official gazette of the Japanese Patent Application Laid-open No. 2005-17968.

Patent document 7 : the official gazette of the Japanese Patent Application Laid-open No. 2001-118369.

### DISCLOSURE OF THE INVENTION

### PROBLEMS TO BE SOLVED BY THE INVENTION

### (Problems in regard to the first conventional art)

The AVN unit according to the aforementioned first conventional art can realize a large-sized screen of the display panel together with the provision of the operation panel, under the restriction of the instrument panel.

However, corresponding to the mounting position of the AVN unit in the instrument panel, it is desired to make the tilt angle of the display panel variable so that the user can adjust at an angle easy to watch. Although it is generally applied to make the tilt angle of the display panel variable, since the operation panel is provided together with the display panel, there is a problem that the angle of the operation panel becomes inappropriate when the tilt angle of the display panel is modified, causing degraded operability of the operation panel by the user. More specifically, accompanying the modified tilt angle of the display panel, it becomes necessary to adjust the tilt angle of the operation panel simultaneously, which compels the user to perform a troublesome adjustment.

Accordingly, it is an object of the present invention to provide an electronic apparatus which controls the tilt angles of the display panel and the operation panel.

### (Problems in regard to the second conventional art)

Also, in the AVN unit according to the second conventional art, it is desired not only to dispose a movable operation panel for installing complicated operation functions, but also to include an entertainment aspect so as to arouse interest in the vehicle drive operation with improved operability.

Accordingly, it is an object of the present invention to provide an electronic apparatus for mounting on a vehicle, etc. having motion control of an operation panel ACP so as to arouse interest in driving the vehicle, with improved the operability of the electronic apparatus.

### (Problems in regard to the third conventional art)

Further, in the third conventional art, when using the position detection mechanism according to the aforementioned Patent document 4, the sliding amount of the actuator is small as compared with the moving amount of the operation panel, and accordingly, which causes a relatively large error and dispersion in the output voltage of the sliding variable resistor, as compared with the case that the operation panel moves the same length as the actuator. As a result, there is produced a degraded detection accuracy of the moving amount (that is, the position) of the operation panel, a position detection object. Accordingly, when moving the operation panel, detecting the position of the operation panel based on the output voltage of the sliding variable resistor, and controlling to halt at a desired position, there is an increased possibility that the stop position deviates from the desired position, as a result of the degraded detection accuracy of the stop position.

Accordingly, it is an object of the present invention to provide an electronic apparatus aiming at miniaturization by reducing the actuator sliding amount of the sliding variable resistor, which is a position detection part of the operation panel ACP, and enabling highly accurate position detection of the operation panel.

### (Problems in regard to the fourth conventional art)

Further, in the fourth conventional art, as described above, the electronic apparatus includes the display panel having a display and the operation panel having an operation panel face, and the operation panel is configured to be movable relative to the display panel, and when the electronic apparatus is switched from an OFF state to an ON state, indication on the display is made after the electronic apparatus is moved from a closed state, in which the operation panel covers a portion of the display, to an open state in which the entire display area of the display of the display panel becomes visually recognizable. Conventionally, when the electronic apparatus is in the OFF state, because the operation panel becomes in the closed state, covering at least a portion of the display of the display panel, the display indication on the display panel has not been used in the closed state.

However, when the operation panel can be shifted into the closed state even in case of the ON state of the electronic apparatus, it is preferable that information related to the function in use be displayed on the display, even in the closed state. Here, in case of the closed state, it is not possible to display the same content in between the closed state and the open state of the operation panel, because a portion of the display is covered by the operation panel, and accordingly, it is necessary to make the contents to be displayed on the display different in between the open state and the closed state.

Accordingly, it is an object of the present invention to provide an electronic apparatus of which content to be displayed on the display is modified in between the open state and the closed state of the operation panel.

### (Problems in regard to the fifth conventional art)

Further, in the fifth conventional art, the two displays in the onboard apparatus according to the aforementioned Patent document 7 are not touch panel displays, and it is necessary to operate switches and buttons disposed in the different positions from the display, while watching the display, which causes bad operability.

Accordingly, it is an object of the present invention to provide an electronic apparatus securing as wide a display area as possible, with good operability as well.

### MEANS TO SOLVE THE PROBLEMS

In order to achieve the aforementioned objects of the present invention, as a first aspect of an electronic apparatus, the electronic apparatus includes a main body; a display panel mounted on the front face portion of the main body in a manner tiltable to the main body (capable of varying the tilt angle relative to the main body); an operation panel mounted on the display panel in a tiltable manner; a tilt control part for controlling to tilt the display panel in response to a first tilt command, and to tilt the operation panel in response to a second tilt command; and a memory part for storing tilt angle information of the operation panel corresponding to the tilt angle of the display panel, and further, the above tilt control part tilts the display panel in response to the first tilt command, and also tilts the operation panel based on the tilt angle information of the operation panel stored in the memory part.

According to the above-mentioned first aspect, because the storage part stores the tilt angle information of the operation panel being set corresponding to the above-mentioned second tilt angle set command, after the user sets the operation panel to an optimal tilt angle corresponding to the tilt angle of the display panel, the operation panel can be tilted automatically to the stored optimal tilt angle in response to the tilt angle change command of the display panel from the user, thus making it unnecessary for the user to operate to tilt the operation panel.

As a second aspect of the electronic apparatus according to the present invention, further, in the first aspect, when the operation panel is tilted in response to the second tilt command, the tilt control part updates the tilt angle information stored in the memory part.

As a third aspect of the electronic apparatus according to the present invention, in the first aspect, the tilt control part controls to tilt the operation panel, after tilting the display panel in response to the first tilt command in the direction to expose the front face of the main body.

As a fourth aspect of the electronic apparatus according to the present invention, in the first aspect, in response to the first tilt command in the direction to close the front face of the main body, the tilt control part controls to tilt the display panel after tilting the operation panel.

According to the third and fourth aspects, the tilt motion of the display panel can be performed in a state that the tilt angle of the operation panel relative to the display panel is small, and thus, collision to an obstacle in the vehicle can be avoided to the maximum extent.

As a fifth aspect of the electronic apparatus according to the present invention, in the first aspect, the tilt control part controls to tilt the display panel, after tilting the operation panel to a reference angle in response to the first tilt command.

As a sixth aspect of the electronic apparatus according to the present invention, in the first aspect, when the tilt motion of the display panel in response to the first tilt command or the tilt motion of the operation panel control part is not completed within a certain time, the tilt control part controls to inhibit the tilt motion of the display panel or the operation panel.

As a seventh aspect of the electronic apparatus according to the present invention, in the first aspect, the tilt control part controls to invalidate an input operated from the operation panel, during the tilt motion of the display panel or the tilt motion of the operation panel.

As an eighth aspect of the electronic apparatus according to the present invention, in the first aspect, further, on detecting the depression of an operation button provided on the operation panel, the tilt control part tilts the operation panel in such a way as to press back the operation panel in response to the depression of the operation button.

According to the eighth aspect, the user (driver) can obtain the sense of touch of being pressed back from the operation panel ACP in response to the depression of the button, making it possible to confirm that the input through the button operation has been made effectively, and thus, the operability can be improved, and the user can feel interested.

As a ninth aspect of the electronic apparatus according to the present invention, in the first aspect, when speed information is input from a speed detection part for detecting the speed information of the vehicle on which the electronic apparatus is mounted, and on detecting the acceleration of the vehicle from the input speed information, the tilt control part tilts the operation panel in the direction of moving closer to the front face of the display panel, while on detecting the deceleration of the vehicle, tilts the operation panel in the direction of moving away from the front face of the display panel.

According to the ninth aspect, even when the upper body of the user (driver) is tilted back and forth by the effect of the acceleration or deceleration of the vehicle, the operation panel ACP is also tilted in front of the user (driver) or in the forward direction, and accordingly, it is possible to maintain the angle of the operation panel ACP easy to operate. Further, since the user (driver) can obtain feedback of the operation panel ACP being tilted in response to the drive operation of acceleration or deceleration, the user (driver) can feel interested.

As a tenth aspect of the electronic apparatus according to the present invention, in the first aspect, the tilt control part detects an inclination of the electronic apparatus, and controls to tilt the operation panel based on the detected inclination.

According to the tenth aspect, by detecting a tilt state of the apparatus when the onboard electronic apparatus is mounted, it is possible to correct the tilt angle of the operation panel ACP to an angle suitable for the user (driver), and accordingly the operability when the operation panel ACP is open is improved.

As an eleventh aspect of the electronic apparatus according to the present invention, in the first aspect, the electronic apparatus further includes a moving part for moving according to the tilt motion of the operation panel; and a detecting part for detecting the tilt angle of the operation panel according to the moving amount of the moving part, and in a first tilt angle range of the operation panel, the above moving part moves by a first moving amount per unit angle of the operation panel, while in a second tilt angle range of the operation panel, moves by a second moving amount per unit angle of the operation panel, which is different from the first moving amount.

As a twelfth aspect of the electronic apparatus according to the present invention, in the eleventh aspect, the second moving amount is greater than the first moving amount.

As a thirteenth aspect of the electronic apparatus according to the present invention, in the eleventh aspect, the electronic apparatus further includes a rotation axis fixed to the display panel; and a spiral-shaped groove provided on the rotation axis. The above operation panel is mounted on the display panel rotatably to the display panel, following the rotation of the rotation axis, and the spiral-shaped groove is formed to move in the first tilt angle range of the operation panel by the first moving amount and also to move in the second tilt angle range of the operation panel by the second moving amount, and is engaged with the moving part, and the above moving part moves in the axial line direction of the rotation axis, following the rotation of the rotation axis.

As a fourteenth aspect of the electronic apparatus according to the present invention, in the first aspect, the electronic apparatus further includes a moving part for moving according to the tilt motion of the operation panel, and a detecting part for detecting the tilt angle of the operation panel according to the moving amount of the moving part, and the above moving part has a different proportion of the moving amount to the tilt motion of the operation panel, depending on the tilt angle range of the operation panel.

### EFFECTS OF THE INVENTION

According to the present invention, in response to a tilt angle change command of the display panel from a user, the tilt motion of the operation panel can be performed automatically to a desired tilt angle.

According to the present invention, it is possible to arouse interest in the vehicle drive operation, with improved operability of the onboard electronic apparatus.

According to the present invention, a moving amount per unit length of the moving part of the position detection portion which moves corresponding to the movement of the operation panel of the electronic apparatus (for example, onboard apparatus) is varied with the moving range of the operation panel. When it is sufficient that the detection accuracy of the position of the operation panel is relatively low, by reducing the moving amount per unit length of the moving part of the position detection portion, the overall structure of the position detection portion can be miniaturized, while as to a movable range requiring high detection accuracy, highly accurate detection can be attained by increasing the moving amount, and thus, the position detection portion of the operation panel mounted on the electronic apparatus can be miniaturized, and also high position detection accuracy can be secured in a necessary range.

According to the present invention, corresponding to opening and closing of the operation panel, the display content on the display is switched automatically and appropriately, which improves the operability and the convenience of the electronic apparatus.

According to the present invention, because of the provision of the onboard apparatus having two touch panel displays, both an enlarged display area and improvement of operability are realized.

### BRIEF DESCRIPTION OF THE DRAWINGS

FIG. 1 shows front views of an onboard electronic apparatus according to a first embodiment.
FIG. 2 shows diagrams illustrating an example of a variety of tilt states of a display panel DISP and an operation panel ACP of an AVN unit.
FIG. 3 shows a schematic configuration diagram of an AVN unit according to a first embodiment.
FIG. 4 shows a configuration diagram of an AVN control unit according to a first embodiment.
FIG. 5 shows diagrams illustrating an opening tilt operation of first tilt motion according to a first embodiment.
FIG. 6 shows diagrams illustrating motion at the time of collision in first tilt motion.
FIG. 7 shows a flowchart of tilt motion control in the opening direction of first tilt motion.
FIG. 8 shows diagrams illustrating tilt motion in the closing direction of first tilt motion.
FIG. 9 shows a flowchart of tilt motion control in the closing direction of first tilt motion.
FIG. 10 shows diagrams illustrating second tilt motion according to a first embodiment.
FIG. 11 shows a control flowchart of second tilt motion.
FIG. 12 shows diagrams illustrating third tilt motion according to a first embodiment.
FIG. 13 shows a flowchart of tilt motion control in the opening direction of third tilt motion.
FIG. 14 shows a flowchart of tilt motion control in the closing direction of third tilt motion.
FIG. 15 shows diagrams illustrating fourth tilt motion according to a first embodiment.
FIG. 16 shows a control flowchart of fourth tilt motion.
FIG. 17 shows diagrams illustrating a particular example of fourth tilt motion.
FIG. 18 shows diagrams explaining invalidation of an operation button according to a first embodiment.
FIG. 19 shows a flowchart illustrating invalidation control of an operation button according to a first embodiment.
FIG. 20 shows front views and side views of an onboard electronic apparatus according to a second embodiment.
FIG. 21 shows a schematic configuration diagram of an AVN unit according to a second embodiment.
FIG. 22 shows a configuration diagram of an AVN control unit according to a second embodiment.
FIG. 23 shows diagrams explaining tilt motion to press back in response to a depression of an operation button.
FIG. 24 shows a flowchart of tilt motion control for pressing back in response to a depression of an operation button.
FIG. 25 shows diagrams explaining tilt motion corresponding to the acceleration and the deceleration of a vehicle.
FIG. 26 shows a flowchart of tilt motion control corresponding to the acceleration and the deceleration of a vehicle.
FIG. 27 shows diagrams explaining tilt motion corresponding to an audio signal.
FIG. 28 shows a diagram explaining the relationship of correspondence between an audio signal and a target angle.
FIG. 29 shows a flowchart of tilt motion control corresponding to an audio signal.
FIG. 30 shows diagrams explaining the correction operation of an initial tilt angle corresponding to an inclination of an AVN unit main body at the time of startup.
FIG. 31 shows a flowchart of correction operation control corresponding to an inclination of an AVN unit main body at the time of startup.
FIG. 32 shows a front view and a side view illustrating a closed state of an operation panel ACP of an electronic apparatus, according to a third embodiment.
FIG. 33 shows a front view and a side view illustrating an open state of an operation panel ACP of an electronic apparatus, according to a third embodiment.
FIG. 34 shows another front view with a side view, illustrating an open state of an operation panel ACP of an electronic apparatus according to a third embodiment.
FIG. 35 shows diagrams illustrating a rotation axis 32 for detecting the position of an operation panel ACP of an electronic apparatus, according to a third embodiment.
FIG. 36 shows a diagram illustrating a state of a rotation axis 32 being engaged with an actuator 44 of a sliding variable resistor 43.
FIG. 37 shows a characteristic diagram illustrating the relationship between the rotation angle of an operation panel ACP and the sliding amount of an actuator, according to a third embodiment.
FIG. 38 shows a diagram illustrating an internal structure of an operation panel ACP of an electronic apparatus according to a third embodiment.
FIG. 39 shows a configuration diagram of a rotation axis 34 having a ratchet cam mechanism 35.
FIG. 40 shows a configuration diagram of a spring 36 for absorbing backlash.
FIG. 41 shows a diagram illustrating a groove provided on a plate board.
FIG. 42 shows a front view and a side view of a display panel and an operation panel being in a closed state, constituting an onboard electronic apparatus, according to a fourth embodiment.
FIG. 43 shows a front view and a side view of a display panel and an operation panel being in an open state, constituting an onboard electronic apparatus, according to a fourth embodiment.
FIG. 44 shows diagrams explaining a first example of switching display content according to a fourth embodiment.
FIG. 45 shows diagrams explaining a second example of switching display content according to a fourth embodiment.
FIG. 46 shows diagrams explaining a third example of switching display content according to a fourth embodiment.
FIG. 47 shows diagrams explaining a fourth example of switching display content according to a fourth embodiment.
FIG. 48 shows a front view and a side view illustrating a closed state of an operation panel of an electronic apparatus, according to a fifth embodiment.
FIG. 49 shows a front view and a side view illustrating an open state of an operation panel of an electronic apparatus, according to a fifth embodiment.
FIG. 50 shows a diagram schematically illustrating two touch panel displays of an onboard apparatus when an operation panel ACP is in an open state.
FIG. 51 shows a diagram schematically illustrating two touch panel displays of an onboard apparatus when an operation panel ACP is in a closed state.
FIG. 52 shows diagrams illustrating a first display example on the touch panel displays of an operation panel ACP according to a fifth embodiment.
FIG. 53 shows diagrams illustrating a second display example on a touch panel display of an operation panel ACP according to a fifth embodiment.
FIG. 54 shows diagrams illustrating a first display example of buttons displayed on a touch panel display of an operation panel ACP, according to a fifth embodiment.
FIG. 55 shows diagrams illustrating a second display example of buttons displayed on a touch panel display of an operation panel ACP, according to a fifth embodiment.
FIG. 56 shows diagrams illustrating a third display example of buttons displayed on a touch panel display of an operation panel ACP, according to a fifth embodiment.
FIG. 57 shows diagrams illustrating a fourth display example of buttons displayed on a touch panel display of an operation panel ACP, according to a fifth embodiment.
FIG. 58 shows a diagram explaining a touchpanel display structure.

### DESCRIPTION OF SYMBOLS

10: main body, DISP: display panel, ACP: operation panel, BT1: operation button, BT2: operation button

### PREFERRED EMBODIMENTS FOR PRACTICING THE INVENTION

The preferred embodiment of the present invention is described hereinafter referring to the charts and drawings. However, the technical scope of the present invention is not limited to the embodiments described below. It is the appended claims, including all equivalents thereof, which are intended to define the scope of the invention.

### (First embodiment)

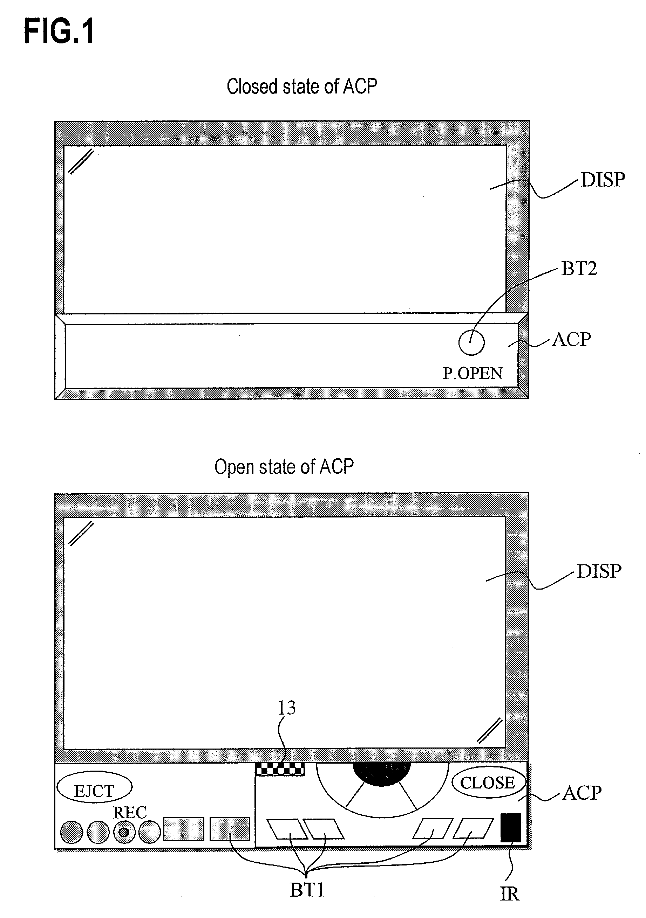

FIG. 1 shows front views of an onboard electronic apparatus according to a first embodiment. Hereafter, as an example of an onboard electronic apparatus, there is described an AVN unit having audio system, television receiver and car navigation system integrated therein. In FIG. 1, there are shown front views of the AVN unit having an operation panel ACP in a shut (closed) state and a spread (open) state. A display panel DISP constituted of a liquid crystal display panel DISP, an organic EL panel, or the like, is mounted in a tiltable (inclinable) manner so that the display plane faces upward relative to a non-illustrated main body, and on the lower end portion of the display panel DISP, an operation panel ACP is mounted in a tiltable manner. In FIG. 1, by a tilting part 13 axially supporting the operation panel ACP in a rotatable manner on the display panel DISP, the operation panel ACP is configured to be tiltable.

On the back face of the operation panel ACP, which is exposed on the user side in the closed state thereof, there is provided an open operation button BT2 (refer to the ACP closed state) for tilting the panel in the direction to open the panel, while on the surface side of the operation panel ACP, which is exposed on the user side in the open state thereof, there are provided a close operation button CLOSE for tilting the panel toward the direction to close the operation panel ACP, and an eject operation button EJCT for tilting the display panel DISP to a fully open state so as to expose the front face side of the main body, and a plurality of operation buttons BT1 for the audio system, the television, the car navigation system, and so on (refer to the ACP open state).

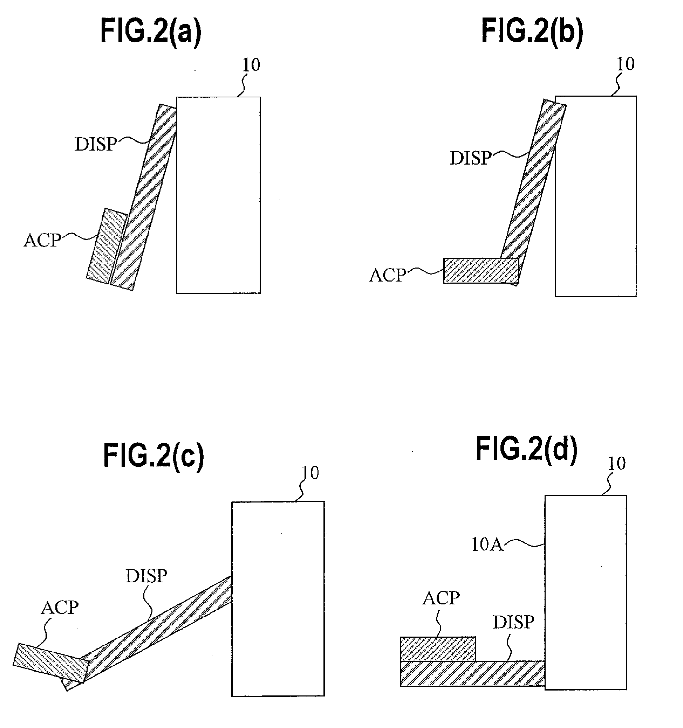

FIG. 2 shows diagrams illustrating an example of a variety of tilt states of the display panel DISP and the operation panel ACP of the AVN unit. In FIG. 2 (a), on the front face of main body portion 10, the display panel DISP is axially supported at the upper end portion thereof, and the display panel DISP is inclined (tilted) approximately 15 degrees, or of that order, in the opening direction to be away from the lower end portion of main body portion 10. Also, the operation panel ACP mounted on the lower end of the display panel DISP is in the closed state relative to the display panel DISP. Meanwhile, in FIG. 2(b), similarly, the display panel DISP is in a tilt state, and correspondingly thereto, the operation panel ACP is also in the tilt state, so that the operation panel ACP is maintained in the horizontal state, with the surface side thereof facing upward. In the above state, the user can observe the display panel DISP from the oblique upper portion side, and also can easily operate the variety of operation buttons disposed on the surface of the operation panel ACP which is maintained in the horizontal state.

In FIG. 2 (c) , the display panel DISP is greatly tilted from main body portion 10, and correspondingly thereto, the operation panel ACP is also greatly tilted. Further, in FIG. 2 (d) , the display panel DISP is tilted 90 degrees from main body portion 10, and the operation panel ACP is in the closed state relative to the display panel DISP. In the above state, a front face 10A of main body portion 10 is 100 percent exposed, which is in a state of being accessible to an insertion/ejection inlet (not shown), provided on the front face 10A, for inserting or ejecting media discs, such as CD and DVD. The state concerned is a 100 percent full open state of the display panel DISP.

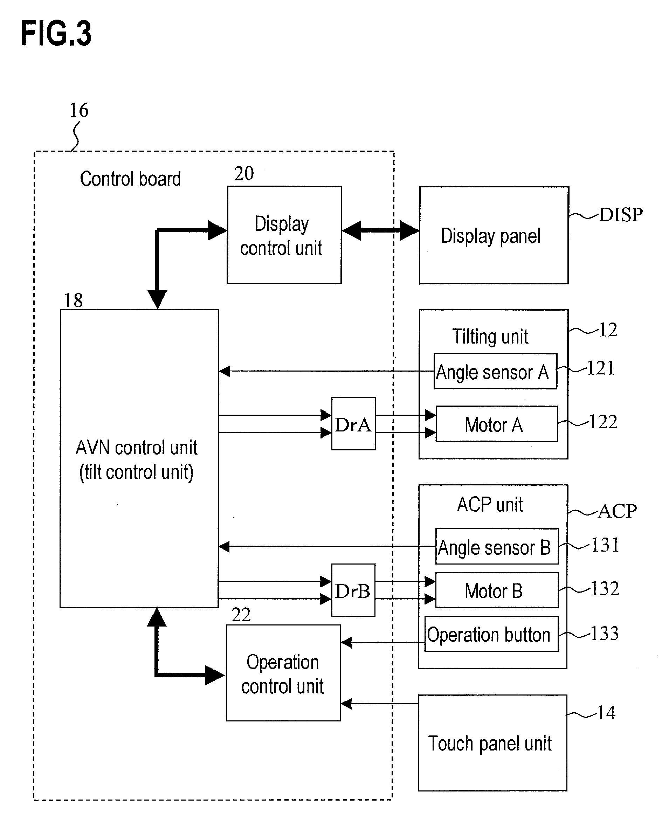

FIG. 3 shows a schematic configuration diagram of the AVN unit according to the first embodiment. As described earlier, the AVN unit is constituted of main body portion 10, the display panel DISP and the operation panel ACP. On main body portion 10, there is provided a control board 16 for controlling the display panel DISP and the operation panel ACP. Control board 16 includes a display control unit 20 for controlling display on the display panel DISP, an operation control unit 22 for controlling operation on the operation panel ACP, an AVN control unit 18 (tilt control part) for performing a variety of kinds of control including tilt motion control of the display panel DISP and the operation panel ACP, a driver DrA for driving a motor A 122 in a tilting unit 12 of the display panel DISP, and a driver DrB for driving a motor B 132 of the operation panel ACP.

Tilting unit 12 for driving to tilt the display panel DISP includes an angle sensor A 121 for detecting an angle of the display panel DISP relative to main body portion 10, and a tilting motor 122 for tilting the display panel DISP. A detected angle signal from angle sensor A 121 is supplied to AVN control unit 18, and corresponding to a drive signal from the above unit 18, motor 122 is driven in the forward direction and the backward direction, by part of a drive signal from the driver DrA. Further, an ACP unit includes an angle sensor B 131 for detecting a tilt angle of the operation panel ACP relative to the display panel DISP, a motor 132 for tilting the operation panel ACP, and operation buttons 133 shown in FIG. 1. An angle signal detected by angle sensor B 131 is supplied to AVN control unit 18, and corresponding to a drive signal from the above unit 18, motor B 132 is driven in the forward and backward directions, by part of a drive signal from the driver DrB. Further, an operation signal from operation button 133 is supplied to AVN control unit 18 via operation control unit 22. Moreover, an operation signal from a touch panel unit 14 provided on the display panel DISP is also supplied to AVN control unit 18, via operation control unit 22.

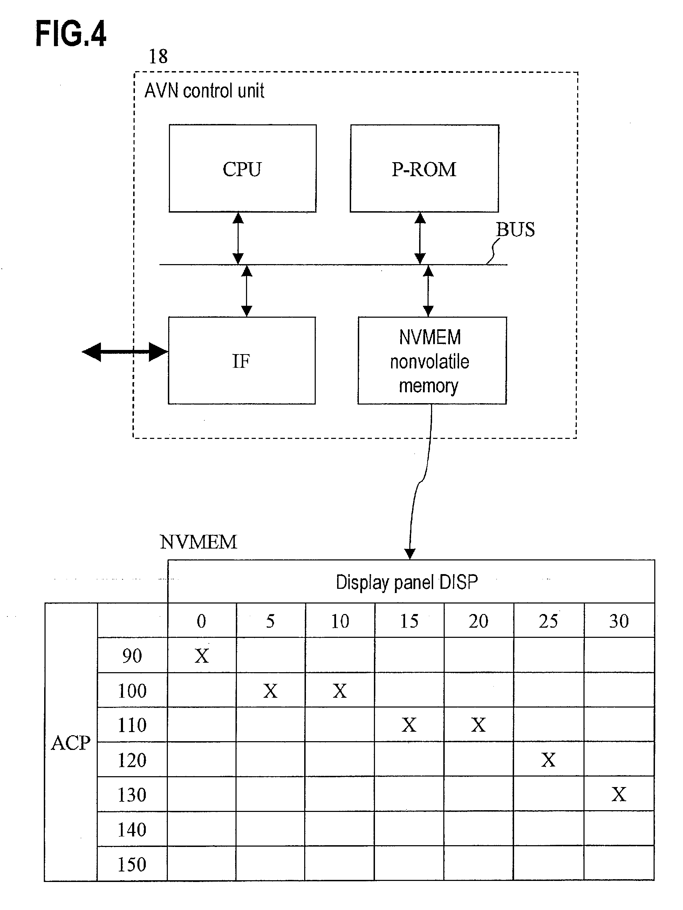

FIG. 4 shows a configuration diagram of AVN control unit 18 according to the first embodiment. AVN control unit 18 is a processor constituted of, for example, a general-purpose microprocessor or ASIC (Application Specific Integrated Circuit), including a central processing unit CPU, a program memory P-ROM having a control program stored therein, an interface IF, and a nonvolatile memory NVMEM (memory part), which are connected via an internal bus BUS. The program memory P-ROM stores a tilt control program for the display panel DISP and the operation panel ACP of the AVN unit, which will be described later.

Also, in the nonvolatile memory NVMEM, corresponding to the tilt angles of the display panel DISP ranging from 0 to 30 degrees (7 stages at steps of 5 degrees), the tilt angles of the operation panel ACP ranging from 90 to 150 degrees (7 stages at steps of 10 degrees) are stored. In the figure, each X denotes each tilt angle of the operation panel ACP being set for each tilt angle of the display panel DISP. In the example shown in FIG. 4, the tilt angle of the display panel DISP relative to the operation panel ACP is set at 90 degrees, corresponding to the tilt angle 0 degree of the display panel DISP relative to the main body. Further, the tilt angle of the operation panel ACP is set at 100 degree, corresponding to the tilt angles of 5 degrees and 10 degrees of the display panel DISP. Further, there are set 110 degrees corresponding to the tilt angles of 15 degrees and 20 degrees of the display panel DISP, 120 degrees corresponding to 25 degrees, and 130 degrees corresponding to 30 degrees, respectively.

In the preferred embodiment, corresponding to the entire tilt angles of the display panel DISP, the tilt angle of the operation panel ACP is initially set at 90 degrees in the above nonvolatile memory NVMEM. Further, the tilt angles of the operation panel ACP, which are set simultaneously when the user sets each display panel DISP to a desired tilt angle, are stored into the above memory as customized tilt angles. Once the tilt angles of the operation panel ACP are set, thereafter, corresponding to the tilt angle control of the display panel DISP by the user, the tilt angle of the operation panel ACP is automatically tilt controlled to a tilt angle which is finally set corresponding to the tilt angle of the display panel DISP. Therefore, it is not necessary for the user to set the tilt angle of the operation panel ACP each time according to the control of the tilt angle of the display panel DISP, and thus troublesome setting is eliminated, enabling increase of user convenience.

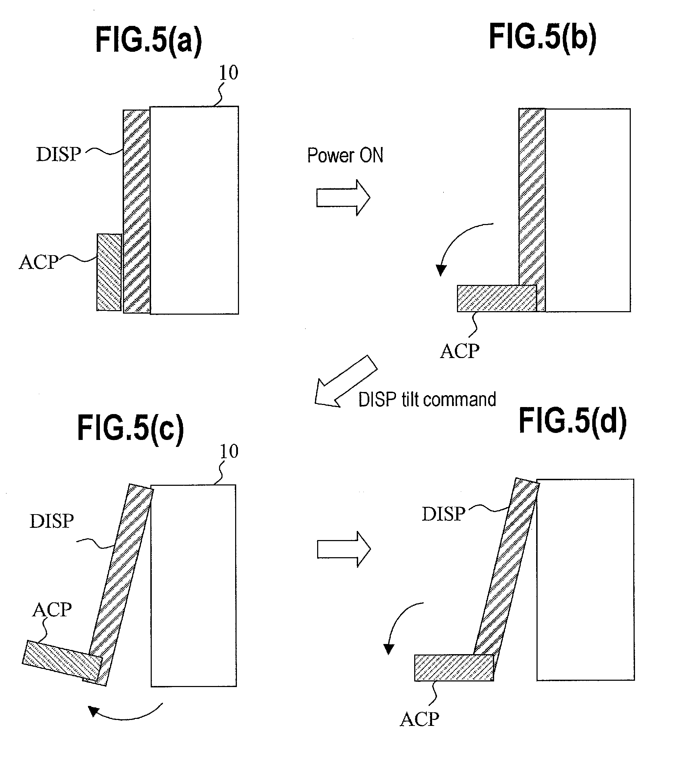

FIG. 5 shows diagrams illustrating an opening tilt motion of first tilt motion according to the first embodiment. FIG. 5 (a) denotes a power-off state, in which the tilt angle of the display panel DISP relative to main body portion 10 of the AVN unit is 0 degree, and the tilt angle of the operation panel ACP relative to the display panel DISP is also 0 degree, signifying the closed states. In the above states, when a power ON operation is carried out by part of, for example, an ignition key of the vehicle, the power in the vehicle is switched on, and as shown in FIG. 5(b), the operation panel ACP is automatically tilt controlled to produce a tilt angle of 90 degrees. In the above state, the surface side of the operation panel ACP faces upward, enabling the operation buttons disposed on the surface side to be operable.

Next, when a command to tilt the display panel DISP in the opening direction is given from the user, as shown in FIG. 5 (c), the display panel DISP is tilted to a tilt angle corresponding to the command angle. At this time, the operation panel ACP maintains the state of 90 degrees. Then, on completion of the tilt motion of the display panel DISP, as shown in FIG. 5(d), the operation panel ACP is automatically tilt controlled to a tilt angle having been set corresponding to the tilt angle of the display panel DISP. The tilt command of the display panel DISP is given to the AVN control unit, for example, by detecting the operation on a tilt command button displayed on the display panel DISP, through a touch panel 14. In response to the above operation, the tilt motion of the display panel DISP is performed, and thereafter, the tilt motion of the operation panel ACP is automatically performed without any operation from the user. Moreover, the tilt angle of the operation panel ACP is controlled to be a tilt angle immediately before, having been set corresponding to the tilt angle of the display panel DISP. Additionally, in case of the initial state (a case of no previous use history), since there is no set angle corresponding thereto, only an initial tilt motion of the operation panel ACP is performed.

Although it may be possible to tilt both the display panel DISP and the operation panel ACP simultaneously, by tilting the display panel DISP first and tilting the operation panel ACP thereafter, as described above, it becomes possible to minimize the moving space of the display panel DISP and the operation panel ACP accompanying the tilt motions, and thus a collision to a variety of articles placed inside the vehicle can be avoided to the possible extent. Also, because the tilt angle of the operation panel ACP having been set immediately before corresponding to the tilt angle of the display panel DISP, is a position of an actual moving result in the space inside the vehicle, the tilt motion control to such the tilt angle has minimum possibilityofcollision, and accordingly, it ispreferable to control to tilt the operation panel ACP to the tilt angle immediately before, being stored in the nonvolatile memory NVMEM.

If the display panel DISP is tilted in the opening direction after the operation panel ACP is tilted beforehand in the opening direction, there is a case that the operation panel ACP collides with other articles while the display panel DISP is being tilted, which may cause undesirable breakage of the operation panel ACP.

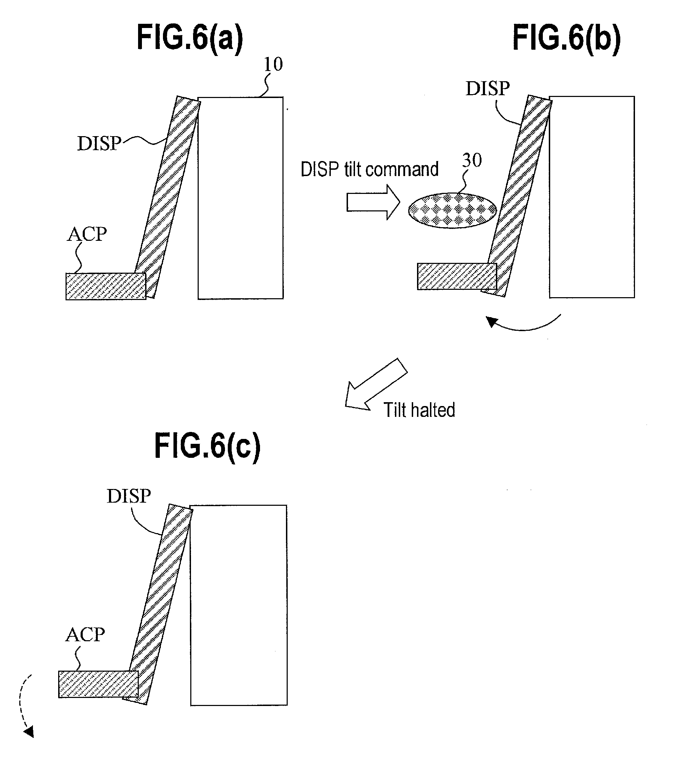

FIG. 6 shows diagrams illustrating a motion at the time of collision in the first tilt motion. This motion is applicable to the tilt motions in both the opening direction and the closing direction of the display panel DISP. Further, the above motion is not limited to a case in which the aforementioned angle of the display panel DISP is made correspondence to the angle of the operation panel ACP, but applicable to a case which includes at least a driving object to be tilt controlled. In the following, the tilt motion in the opening direction will be described.

In the tilt motion in the opening direction of the display panel DISP, the display panel DISP is tilted first, and then the operation panel ACP is tilted, as described above. In this case, when the tilt motion cannot be completed because of collision in the first tilt motion, a subsequent tilt motion is suspended, because any occurrence of abnormality may be considered. In FIG. 6 (a), the display panel DISP is in the state of being approximately 20 degrees tilted from main body portion 10, and the operation panel ACP is in the state of being 110 degrees tilted from the display panel DISP. Then, when a tilt command to the display panel DISP in the opening direction is given, the display panel DISP is tilt controlled in the opening direction. At this time, as shown in FIG. 6(b), when the tilt motion cannot be completed within a predetermined time because of collision with any obstacle 30, first, the display panel DISP is suspended to tilt, and restored to the original tilt position. Secondly, as shown in FIG. 6 (c), a subsequent tilt motion of the operation panel ACP is suspended. With this, it is possible to prevent the occurrence of an unexpected accident.

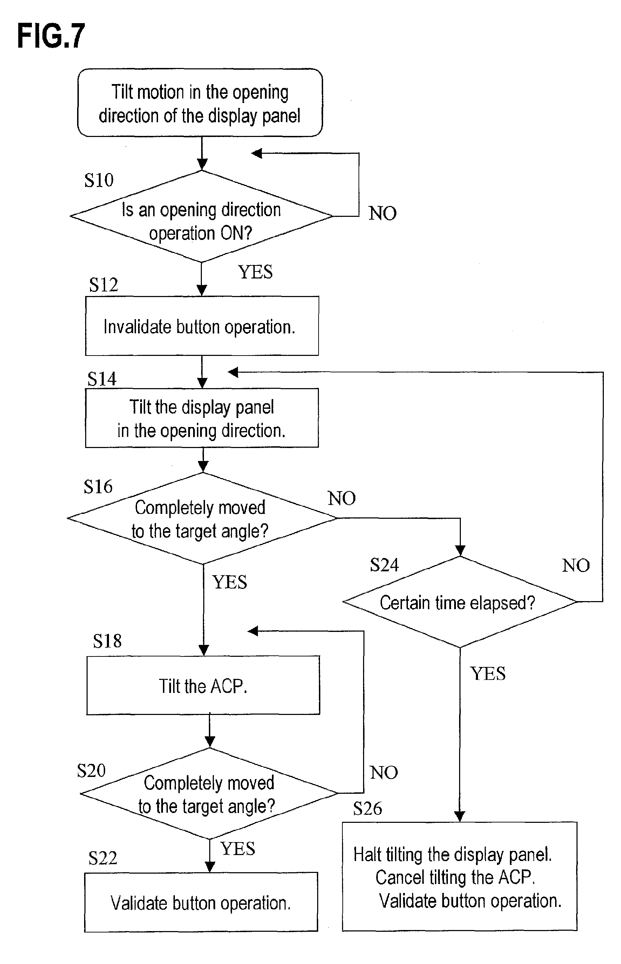

FIG. 7 shows a flowchart of tilt motion control in the opening direction of the first tilt motion. The above tilt motion control is performed by a control program in AVN control unit 18. First, as an operation button using the touch panel, a command button to tilt the display panel DISP is displayed on the display panel DISP. When an operation of the opening direction is set ON by part of the above tilt command button (S10), first, prior to the tilt motion, the entire operation buttons on the operation panel ACP and the entire operation buttons displayed on the display panel DISP are invalidated. With this, it is prevented to initiate an operation command caused by a collision with an obstacle during the tilt motion which is not desired by the user (S14). Then, the display panel DISP is tilted in the opening direction (S14). The above tilt motion, which is performed by driving a motor provided in the tilting unit of the display panel DISP, is monitored whether the movement to a target angle is completed within a certain time (S16, S24). On completion of the tilt motion of the display panel DISP to the target angle within the certain time (YES in S16), the tilt motion of the operation panel ACP is performed next (S18). The above tilt motion is automatically motion controlled, without waiting for an operation command from the user, so that the tilt angle of the operation panel ACP becomes the angle corresponding to the tilt angle of the display panel DISP, being stored in the nonvolatile memory NVMEM of the AVN control unit. Then, on completion of the tilt motion to the target angle (YES in S20), the operation buttons of the operation panel ACP and the display panel DISP are validated (S22).

In the first tilt motion of the display panel DISP, when the tilt motion to the target angle is incomplete even a certain time elapses (YES in S24), the related tilt motion is suspended, and the restoration to the original tilt angle is made, and also the second tilt motion on the operation panel ACP is canceled and the operation buttons are validated (S26). Further, also in the second tilt motion of the operation panel ACP, when the tilt motion to the target angle is not completed before the lapse of a certain time, the above tilt motion of the operation panel ACP is canceled, and preferably, the restoration to the original angle is made.

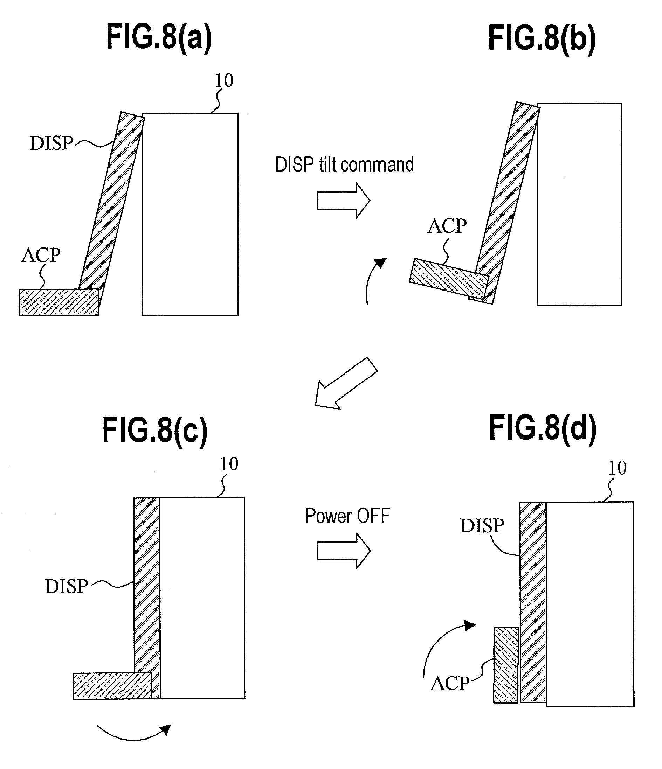

FIG. 8 shows diagrams illustrating tilt motion in the closing direction of the first tilt motion. In FIG. 8 (a), the display panel DISP is in a state of approximately 20 degrees open from main body portion 10, and the operation panel ACP is tilted in the horizontal direction. In the above state, when an operation to close the display panel DISP to 0 degree from the main body is performed using the operation button of the display panel DISP, in response to the above tilt command, first, the operation panel ACP is tilted to the tilt angle of 90 degrees which is stored corresponding to 0 degree of the display panel DISP, which is as shown in FIG. 8(b). Thereafter, as shown in FIG. 8(c), the display panel DISP is tilted to 0 degree specified by the command. Then, when the power is switched off, the operation panel ACP is tilted to 0 degree from the display panel DISP, and put into a completely closed state. In case the power is switched off in the state shown in FIG. 8 (a), first, the operation panel ACP is tilted to 0 degree from the display panel DISP, and thereafter, the display panel DISP is tilted to the commanded 0 degree from main body portion 10.

As such, in the tilt motion of the display panel DISP in the closing direction, on the premise that, accordingly thereto, the operation panel ACP is tilted to the further closing direction, first the operation panel ACP is tilted, so that the shape of the display panel DISP combined with the operation panel ACP becomes minimized, and secondly, the display panel DISP is tilted. With this, it becomes possible to reduce the shape of the display panel DISP in the tilt motion, which leads to a reduction in the possibility of collision with an obstacle inside the vehicle. Also, in the state that the operation panel ACP is open relative to the display panel DISP, when the display panel DISP is tilted in the closing direction, since there is a possibility that the open operation panel ACP may collide with the vehicle floor, etc., preferably, the operation panel ACP is tilted prior to the display panel DISP. Further, in the tilt motion in the closing direction also, similar to the description of FIG. 6, when the tilt motion of the operation panel ACP is not completed within a certain time at the first tilt motion, the tilt motion concerned is canceled, and the restoration to the original positionismade, and further, the tilt motion of the display panel DISP scheduled next is also canceled.

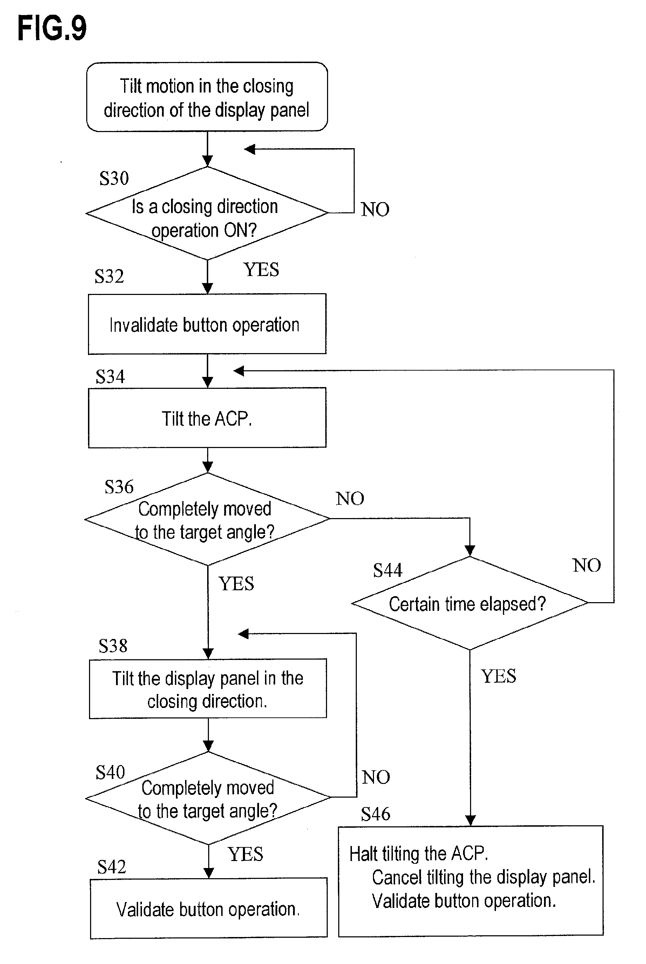

FIG. 9 shows a flowchart of tilt motion control in the closing direction of the first tilt motion. First, when there is an operation command to shift the tilt motion of the display panel DISP in the closing direction (YES in S30), the entire button operations are invalidated first so as to avoid an unexpected operation command during the tilt motion (S32). Thereafter, the operation panel ACP is tilted to a next tilt angle stored corresponding to the tilt angle of the display panel DISP (S34). When the above tilt motion is shifted to a target angle before the lapse of a certain time (YES in S36), next, the display panel DISP is tilted in the closing direction (S38) . On completion of the tiltmotion (YES in S40), the entire button operations are validated (S42).

Also, in case that the tilt motion of the operation panel ACP is incomplete within the lapse of the certain time (YES in S44), the tilt motion concerned is suspended, and the restoration to the original position is made, and also, the tilt motion of the display panel DISP scheduled next is canceled. Thereafter, the entire button operations are validated (S46).

Thus, in the first tilt motion, in case the display panel DISP is commanded to tilt in the opening direction, on the premise that the operation panel ACP is also tilted in the opening direction, the operation panel ACP is tilted after the display panel DISP is tilted. Meanwhile, in case the display panel DISP is commanded to tilt in the closing direction, on the premise that the operation panel ACP is also tilted in the closing direction, the display panel DISP is tilted after the operation panel ACP is tilted. Then, in any cases, a button operation during the tilt motion is invalidated. Further, when the first tilt motion is not completed within a certain time, the tilt motion concerned is suspended, and the restoration to the original position is made, and also, the subsequent tilt motion is canceled. Also, by respectively storing the tilt angles of the operation panel ACP set by the user corresponding to the tilt angles of the display panel DISP, the tilt motion of the operation panel ACP is automatically performed in response to the tilt command of the display panel DISP.

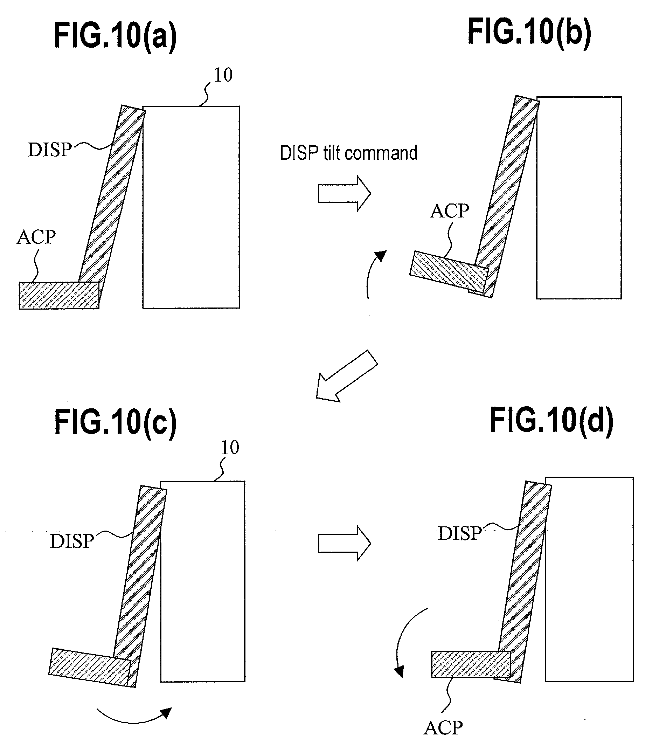

FIG. 10 shows diagrams illustrating second tilt motion according to the first embodiment. In the tilt motion concerned, in response to a tilt command in either the opening direction or the closing direction of the display panel DISP, first, the operation panel ACP is tilted to a position of 90 degrees (reference position) from the display panel DISP in either case, and thereafter, the display panel DISP is tilted to a target angle. In other words, during the tilt motion of the display panel DISP, the operation panel ACP is continuously maintained at an angle of 90 degrees from the display panel DISP. Also, as another method, it may be possible to tilt the operation panel ACP to a position stored in the nonvolatile memory NVMEM after tilting the display panel DISP. Or otherwise, after tilting the display panel DISP, the tilt angle of the operation panel ACP may not be adjusted, or may be adjusted manually. In regard to adjusting the tilt angle of the operation panel ACP, three adjustment modes (automatic tilt to an angle stored in the memory, manual adjustment, and no tilt adjustment) may be settable in advance. Then, similar to the first tilt motion, a button operation during the tilt motion is invalidated, and when the tilt motion is not completed within a predetermined time, the tilt motion concerned is canceled, and also the subsequent tilt motion is canceled.

In the state shown in FIG. 10 (a), when there is a closing direction tilt command of the display panel DISP, as shown in FIG. 10 (b), the operation panel ACP is tilted to an angle of 90 degrees (reference angle) from the display panel DISP, and thereafter, as shown in FIG. 10 (c), the display panel DISP is tilted to the commanded position. With the above state, the tilt motion is completed. Or, as another method, it may be possible to tilt the operation panel ACP thereafter to an angle relative to the display panel DISP, being stored in the nonvolatile memory NVMEM, as shown in FIG. 10 (d) .

On the other hand, when there is an opening direction tilt command of the display panel DISP, first, the operation panel ACP is closed to 90 degrees from the state shown in FIG. 10(d) (FIG. 10(c)), and the displaypanel DISP is tilted in the opening direction (FIG. 10(b)). As another method, the operation panel ACP may be tilted thereafter, to a tilt angle being stored correspondingly to the tilt angle of the display panel DISP (FIG. 10(a)).

In any case of tilting the display panel DISP in either direction, because the operation panel ACP is once closed to the reference position of 90 degrees, it is possible to reduce the possibility of the operation panel ACP colliding with an obstacle inside the vehicle, during the tilt motion of the display panel DISP. Also, before the display panel DISP is tilted, the operation panel ACP is closed to the position of 90 degrees no matter where the tilt position of the operation panel ACP may be set, and therefore, the possibility of colliding with the obstacle can be restrained. Further, when the tilt motion of the display panel DISP is guaranteed when the operation panel ACP is positioned at 90 degrees, which is a position of the most closed state among the open states, by performing such the second tilt motion, the tilt motion can be performed within the guaranteed range thereof.

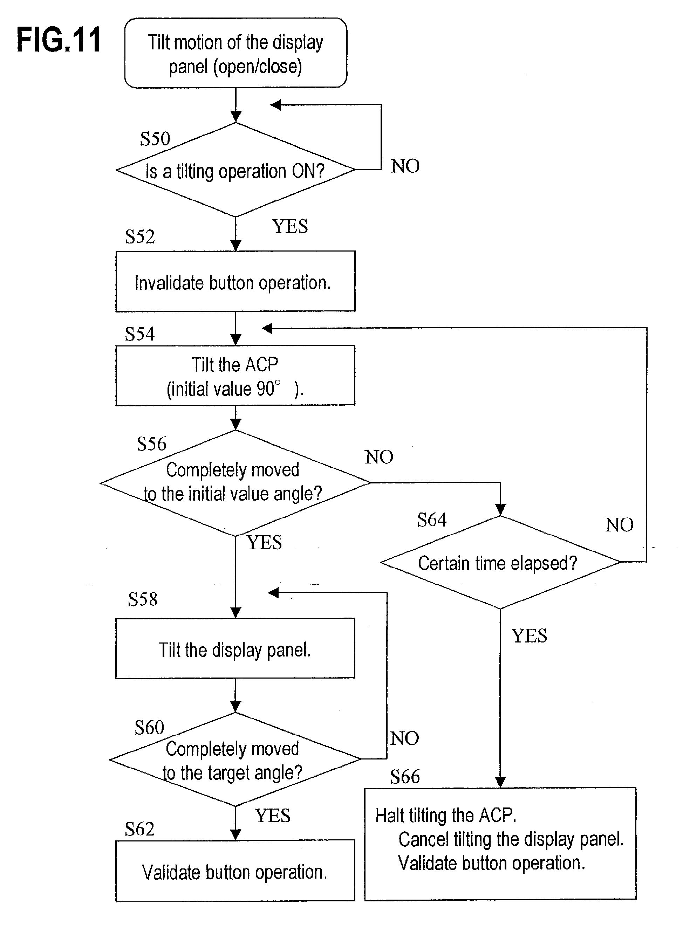

FIG. 11 shows a control flowchart of the second tilt motion. First, when the tilt motion of the display panel DISP is operated (YES in S50), the entire button operations are invalidated (S52) , and the operation panel ACP is tilted to the initial angle of 90 degrees (S54). When the above tilt motion is completed within a certain time (YES in 56) , next, the display panel DISP is tilted to a target angle (S58). On completion of the above tilt motion (YES in S60) , button operations are validated (S62). Further, in case that the tilt motion of the operation panel ACP is incomplete within the certain time (YES in S64), the tilt motion concerned is canceled, and the restoration to the original position is made, and also, the subsequent tilt motion of the display panel DISP is canceled. Then, the button operations are validated (S66).

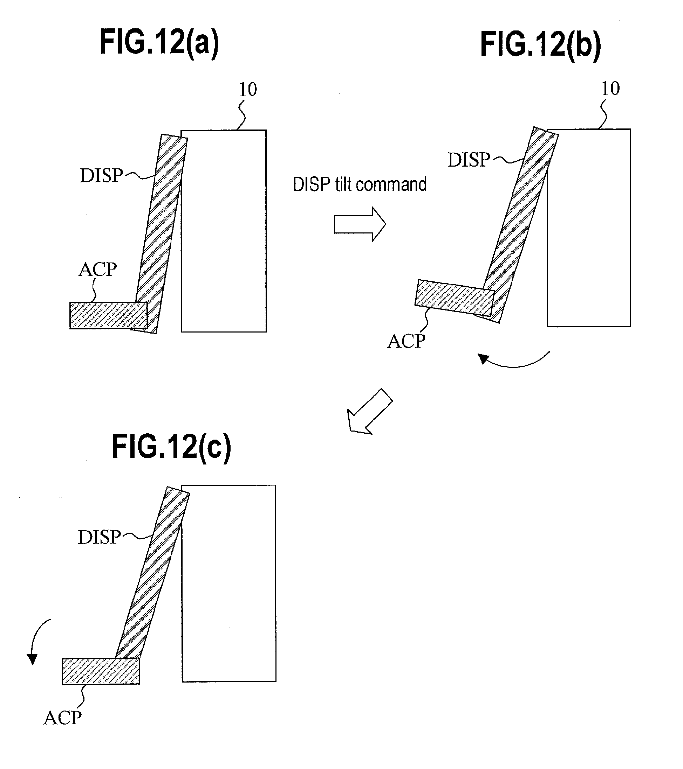

FIG. 12 shows diagrams illustrating third tilt motion according to the first embodiment. In the tilt motion concerned, in response to the tilt command of the display panel DISP, tilt motion control is performed so as to maintain an absolute angle of the operation panel ACP. At that time, in an opening direction tilt command, the display panel DISP is tilt controlled first, and then, the operation panel ACP is tilt controlled. Reversely, in a closing direction tilt command, the operation panel ACP is tilt controlled first, and then, the display panel DISP is tilt controlled.

In the state of FIG. 12(a), when there is an opening direction tilt command of the display panel DISP, first, the display panel DISP is tilted to the commanded position as shown in FIG. 12 (b). Thereafter, as shown in FIG. 12 (c) , the operation panel ACP is tilted in the opening direction by the same angle as the moving angle of the display panel DISP. As a result, the operation panel ACP maintains the absolute angle (in the example of FIG. 12, horizontal direction) before the tilt command of the display panel DISP. Thus, in a more closed state (the state of FIG. 12 (a)) of the operation panel ACP between before and after the tilt motion of the display panel DISP, the display panel DISP can be tilted. Reversely, in the state of FIG. 12 (c), when there is a closing direction tilt command of the display panel DISP, first, the operation panel ACP is tilted in the closing direction by the same angle as the display panel DISP, so as to put into the state shown in FIG. 12(b). Thereafter, by tilting the display panel DISP in the closing direction, so as to put into the state shown in FIG. 12 (a). In the above case also, the display panel DISP can be tilted in a more closed state of the operation panel ACP.

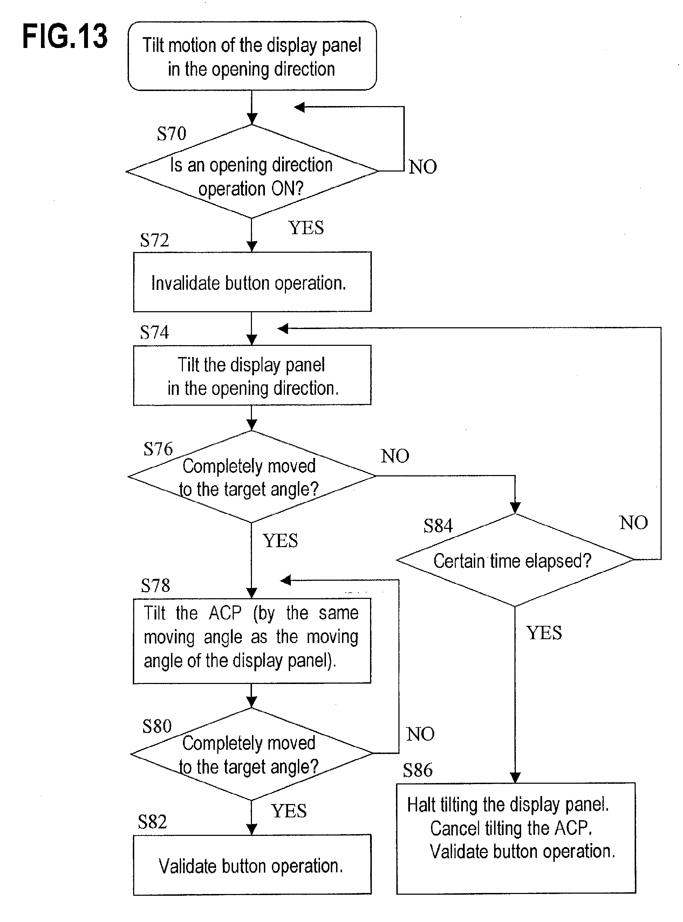

FIG. 13 shows a flowchart of tilt motion control in the opening direction of the third tilt motion. When there is an operation in the opening direction of the display panel DISP from touch panel 14 of the display panel DISP (YES in S70) , a button operation is invalidated (S72) , and first, the display panel DISP is tilted in the opening direction (S74). When the display panel DISP is tilted to a target angle within the lapse of a certain time (YES in S76) , then, the operation panel ACP is tilted by the same angle as the tilt angle of the display panel DISP (S78). With this, the absolute angle of the operation panel ACP is maintained. Then, on completion of the tilt motion to the target position (YES in S80) , the button operation is validated (S82). In the above case also, in case that the tilt motion of the display panel DISP is incomplete (YES in S84), the tilt motion of the display panel DISP is suspended, and the subsequent tilt motion of the operation panel ACP is canceled, and the button operation is validated (S86). Also, in the second tilt motion of the operation panel ACP, in case of incompletion within the lapse of a certain time, the tilt motion of the operation panel ACP is canceled, and preferably, the display panel DISP is restored to the original tilt angle.

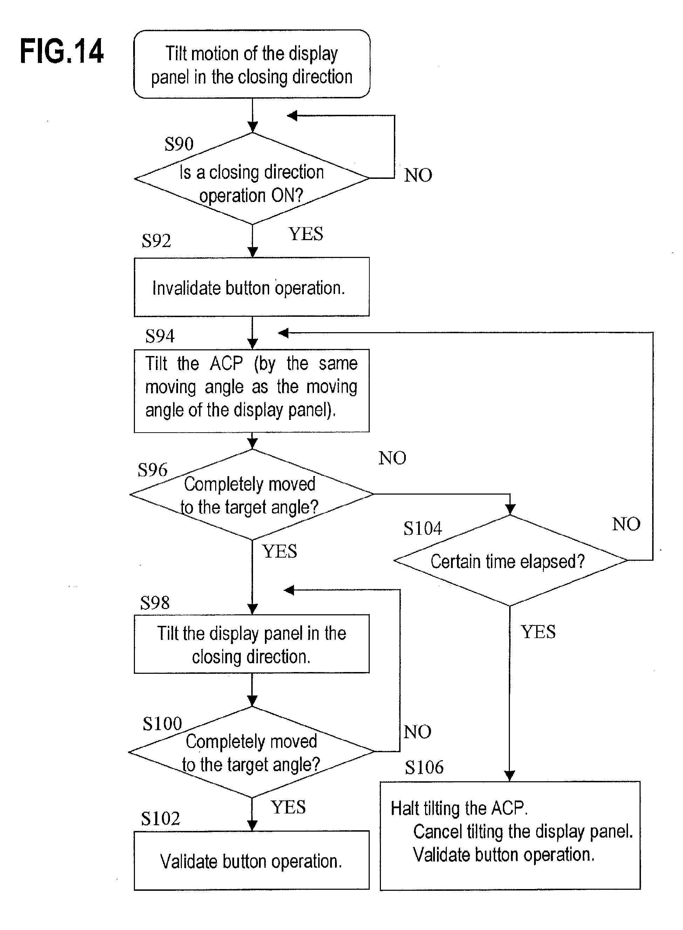

FIG. 14 shows a flowchart of tilt motion control in the closing direction of the third tilt motion. When there is an operation in the closing direction of the display panel DISP from touch panel 14 of the display panel DISP (YES in S90) , a button operation is invalidated (S92) , and first, the operation panel ACP is tilted by the same angle as the moving angle of the display panel DISP (S94) . When the operation panel ACP is tilted to the target angle within the lapse of a certain time (YES in S96), the display panel DISP is tilted in the closing direction (S98). Then, on completion of the tilt motion to the target position (YES in S100), the button operation is validated (S102). In the above case also, in case of the incomplete tilt motion of the operation panel ACP in the certain time (YES in S104) , the tilt motion of the operation panel ACP is suspended, and the subsequent tilt motion of the display panel DISP is canceled, and the button operation is validated (S106) .

In the third tilt motion, when there is a tilt command of the display panel DISP, the tilt motion of the display panel DISP is performed while maintaining the absolute angle of the operation panel ACP prior to the tilt command. In this case, the tilt angle of the operation panel ACP stored in the nonvolatile memory NVMEM, corresponding to the tilt angle of the display panel DISP, is not used. Accordingly, by only setting the tilt angle of the operation panel ACP by the user, correspondingly to one tilt angle of the display panel DISP, and thereafter, by part of the tilt command of the display panel DISP, an automatic tilt motion can be performed while maintaining the absolute angle of the operation panel ACP at that time.

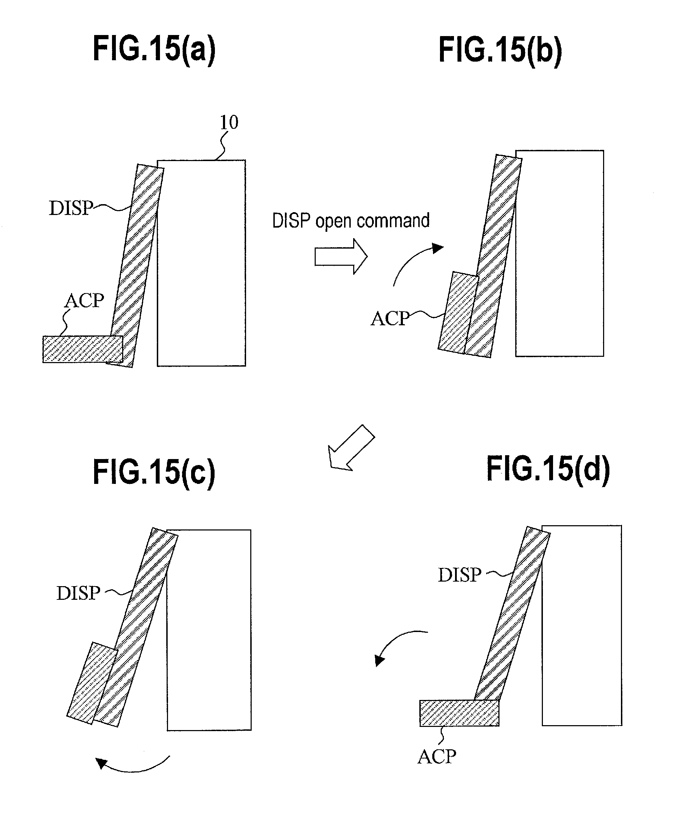

FIG. 15 shows diagrams illustrating fourth tilt motion according to the first embodiment. In the above tilt motion, to a tilt command to tilt in any of the opening and closing directions of the display panel DISP, first, the operation panel ACP is moved to the reference position (0 degree) by tilting the operation panel ACP to close to 0 degree relative to the displaypanel DISP, and at the closed state, the displaypanel DISP is tilted, and finally, the operation panel ACP is tilted to have an absolute angle before the tilt.

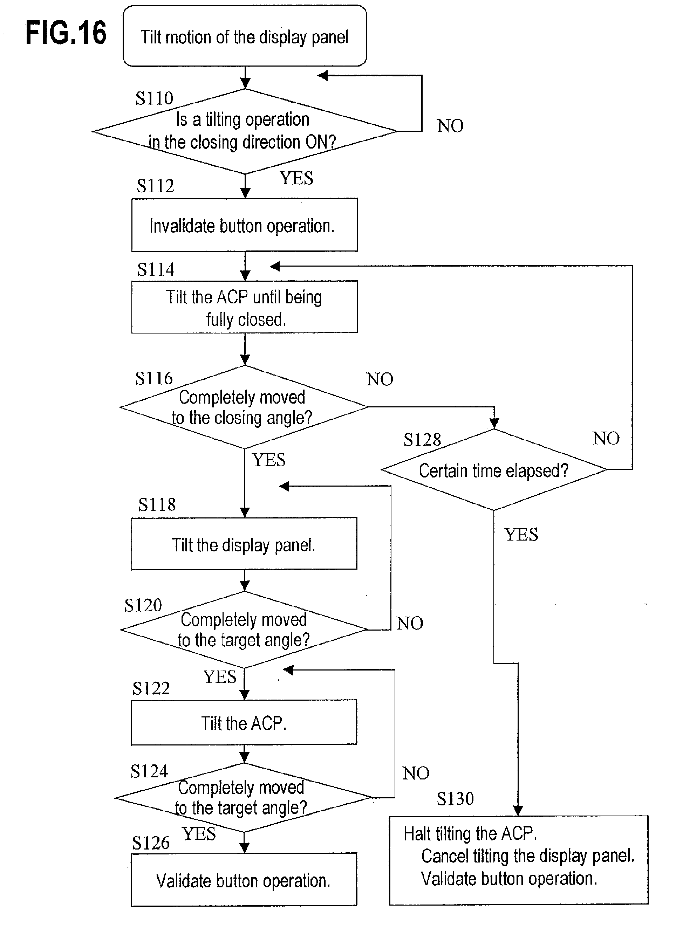

FIG. 16 shows a control flowchart of the fourth tilt motion. Referring to FIGS. 15, 16, the fourth tilt motion is described. From the state shown in FIG. 15 (a) , when there is a tilt operation command of the display panel DISP (YES in S110), the entire button operations are invalidated (S112), and first, the operation panel ACP is tilted to close to 0 degree relative to the display panel DISP, as shown in FIG. 15(b) (S114). When the operation panel ACP becomes the closed angle (0 degree) within a certain time (YES in S116), next, as shown in FIG. 15(c), the display panel DISP is tilted to the position designated by the operation command (S118). On completion of the tilt motion to the target angle (S120), theoperationpanelACPistilted to the original absolute angle (S122), as shown in FIG. 15 (d) . On completion of the movement to the target angle (YES in S124), finally, button operation is validated (S126). In the above-mentioned tilt motions in S118 and S122, when the tilt motion to the target angle is not completed within a certain time, the tilt motion concerned is canceled halfway, and the restoration to the original position is made (not shown).

Further, in case of the first tilt motion to close the operation panel ACP is incomplete within a certain time (YES in S128), the tilt motion of the operation panel ACP is canceled, and the restoration to the original position is made, and also, the tilt motion of the display panel DISP thereafter is canceled. Then, finally, button operations are validated (S130). With this, in case of an incomplete tilt motion at the halfway, the control thereafter is entirely canceled, and thereby it is possible to prevent the occurrence of an unexpected accident. Also, during the second tilt motion of the operation panel ACP, in case of an incomplete tilt motion to the target angle within the lapse of a certain time, the tilt motion of the operation panel ACP is canceled, and preferably, the display panel DISP is restored to the original tilt angle.

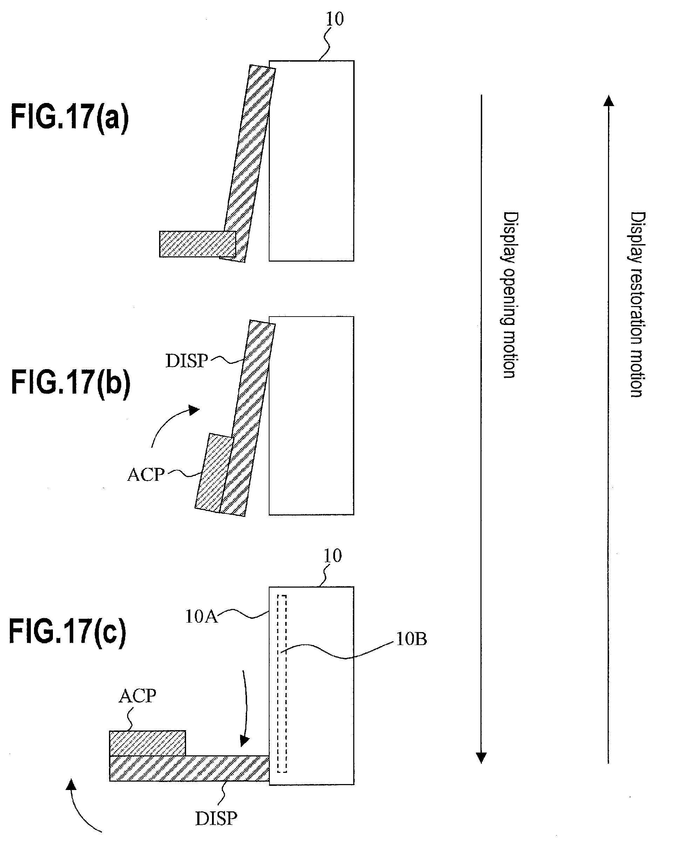

FIG. 17 shows diagrams illustrating a particular example of the fourth tilt motion. The particular example is a tilt motion to fully open the display panel DISP. To fully open the display panel DISP is to put a window for inserting the medium disk, provided on the front face of the main body, into a 100 percent exposed state, which is controlled when an operation button EJECT (refer to FIG. 1) provided on the surface side of the operation panel ACP is operated. In the above case, when the operation button EJECT is operated in the state shown in FIG. 17(a), the operation panel ACP is tilted to close to the position of 0 degree relative to the display panel DISP, as shown in FIG. 17 (b). Thereafter, the axis of the display panel DISP is moved downward along a tilt groove 10B provided in the internal side of main body portion 10, so as to be tilted to a position being open 90 degrees relative to main body portion 10, as shown in FIG. 17(c). At the above state, the operation panel ACP is not tilted to the original angle. As a result, front face 10A of main body portion 10 becomes a 100 percent open state.

Reversely, when the display panel DISP is restored to the original state from the fully open state, the tilt motion is performed in the opposite direction, i.e. in the order of FIGS. 17(c), (b) to (a). The above restoration motion is performed by operating the open button BT2 (refer to FIG. 1) on the back side of the operation panel ACP. In this case also, because the display panel DISP is tilted at the state that the operation panel ACP is completely closed, it becomes possible to reduce the possibility of collision with an obstacle inside the vehicle in a particular tilt motion to fully open.

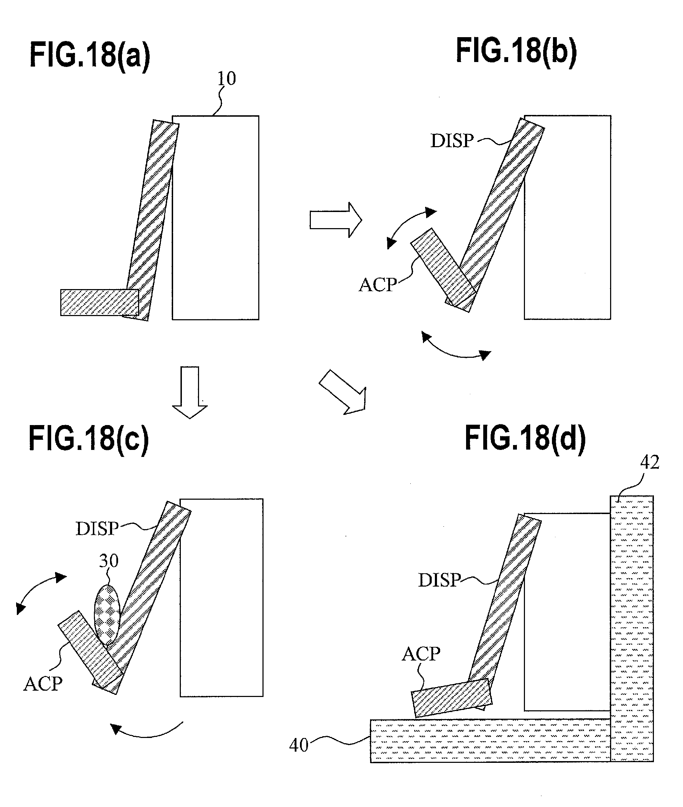

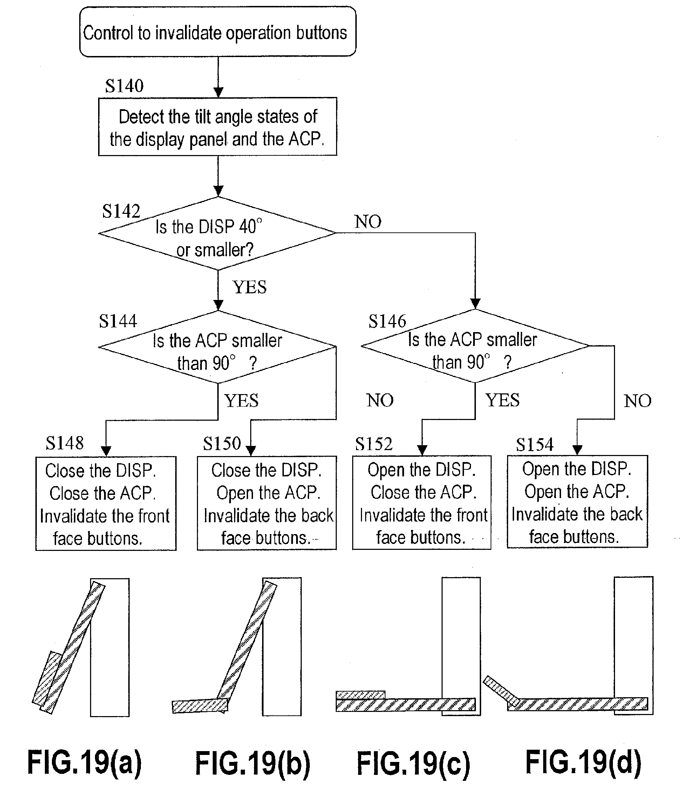

FIG. 18 shows diagrams explaining invalidation of an operation button according to the first embodiment. Also, FIG. 19 shows a flowchart illustrating the control thereof. In the state shown in FIG. 18 (a) , when there is a command to tilt the display panel DISP, as described earlier, the operation button is inactivated while the display panel DISP and the operation panel ACP are being tilted, as shown in FIG. 18(b). Further, as shown in FIG. 18(c), when the operation panel ACP is in a closed state relative to the display panel DISP, a button on the surface may possibly be operated because of an obstacle 30 sandwiched therebetween. For the above reason, the operation of the surface button is invalidated when the operation panel ACP is in the closed state. In this case, the closed state of the operation panel ACP signifies a state of, for example, 90 degrees or less relative to the display panel DISP.

Also, as shown in FIG. 18 (d) , when the operation panel ACP is in an open state relative to the display panel DISP, in case that main body portion 10 is mounted on a position near vehicle floor 40 from which instrument panel 42 is directly extended, the button BT2 on the back side of the operation panel ACP may possibly be operated by colliding with floor 40. For the above reason, the operation on the button disposed on the back side of the operation panel ACP is inactivated.

Referring to the flowchart shown in FIG. 19, the inactivation of the operation button in FIGS. 18(c), (d) will be described in more detail. First, AVN control unit 18 detects the angle states of the display panel DISP and the operation panel ACP, using a signal from a sensor (S140). In case that the display panel DISP is positioned, for example, 40 degrees or less (YES in S142), and in case that the operation panel ACP is positioned less than 90 degrees from the display panel DISP (YES in S144), the state is as shown in FIG. 19 (a) , and accordingly, the surface button of the operation panel ACP is invalidated (S148) . The above state corresponds to the state shown in FIG. 18(c). Meanwhile, in case that the operation panel ACP is positioned no less than 90 degrees from the display panel DISP (NO in S144), the state is as shown in FIG. 19(b), and accordingly, the back face button of the operation panel ACP is inactivated (S150). The above state corresponds to the state shown in FIG. 18(d).

Next, in case that the tilt angle of the display panel DISP exceeds 40 degrees from main body portion 10 (NO in S142), since the above state virtually signifies a 100% open state of the display panel DISP, in case that the operation panel ACP is positioned less than 90 degrees from the display panel DISP (YES in S146), the state is as shown in FIG. 19(c), and accordingly, the button operation on the surface side of the operation panel ACP is invalidated (S152) . On the other hand, in case that the operation panel ACP is positioned no less than 90 degrees from the display panel DISP (No in S146) , the state is as shown in FIG. 19 (d) , which does not occur normally, and the button on the back face side of the operation panel ACP is invalidated (S154) .

As shown above, when the display panel DISP is in an ordinary open state (at 40 degrees or less) , if the operation panel ACP is in an ordinary open state (at 90 degrees or more), the state is as shown in FIG. 19 (b) , and accordingly the button on the back face side of the operation panel ACP is invalidated, and also the entire buttons on the surface side of the operation panel ACP are validated. In the above state, when the button EJECT is operated, control is performed to tilt display panel DISP to be 100 percent open and the operation panel ACP to a closed state (FIG. 19(c)).

Further, even when the display panel DISP is in an ordinary open state, if the operation panel ACP is in a closed state (less than 90 degrees, ordinarily no other than 0 degree), the state becomes as shown in FIG. 19 (a) , and accordingly, by invalidating the buttons on the surface side of the operation panel ACP, an unexpected operation is prevented even in the event that an obstacle is sandwiched. In the above state, when the open button BT2 provided on the back face side of the operation panel ACP is operated, the operation panel ACP is tilted to a tilt angle stored in the nonvolatile memory NVMEM.

Next, when the display panel DISP is in a state other than the ordinary open state (exceeding 40 degrees), ordinarily, there is no other case than the display panel DISP being 100 percent open and the operation panel ACP being in a closed state, and therefore, in the above case, the surface button of the operation panel ACP is invalidated, as shown in FIG. 19 (c). In the above state, when the open button BT2 provided on the back face side of the operation panel ACP is operated, the operation panel ACP and the display panel DISP are restored to the states prior to the full open state.

Further, when the state is as shown in FIG. 19 (d) which does not occur ordinarily, the back face button of the operation panel ACP is invalidated. Here, although the button EJECT and the button CLOSE provided on the surface of the operation panel ACP are validated, other buttons are invalidated. As such, minimum surface buttons are validated. Namely, through the operation of the button EJECT on the surface of the operation panel ACP, the display panel DISP and the operation panel ACP are tilted to a state prior to the state of the display panel DISP being fully open.

Other than the above description, according to the present embodiment, the close button CLOSE is provided on the surface side of the operation panel ACP (refer to FIG. 1). By operating the above CLOSE button when the operation panel ACP being in an open state intercepts other operation buttons such as an automatic air-conditioner, the operation panel ACP is temporarily closed to the position of 0 degree relative to the display panel DISP. Then, by operating the open button BT2 on the back face side of the operation panel ACP thereafter, the operation panel ACP having been temporarily closed is restored to the preceding position. By part of the above series of tilt motion control, even when the other operation buttons are temporarily intercepted, other operation buttons can be operated, without tilting the display panel DISP.

Further, in the first tilt motion according to the present embodiment, in response to the power on, the display panel DISP is tilted to a tilt angle at the time of the power off, and thereafter, the tilt motion of the operation panel ACP is automatically performed to a tilt angle corresponding to the tilt angle of the display panel DISP which is stored in the nonvolatile memory NVMEM. In the above state, when a tilt operation of the display panel DISP is performed, the tilt motion thereof is performed to a desired tilt angle, and the operation panel ACP is automatically controlled to a tilt angle corresponding to the above tilt angle of the display panel DISP. Here, when the power is switched off, the tilt angle of the display panel DISP at that time is stored. Then, when the power is switched on next, the display panel DISP is controlled to the tilt angle immediately before, and correspondingly to the above, the operation panel ACP is automatically controlled to the tilt angle stored in the nonvolatile memory NVMEM. In the above state, when the close button CLOSE provided on the surface of the operation panel ACP is operated, a tilt motion is performed to temporarily close the operation panel ACP. Then, if the open button BT2 on the back face of the operation panel ACP is operated, the operation panel ACP is tilted to the preceding tilt angle.

### (Second embodiment)

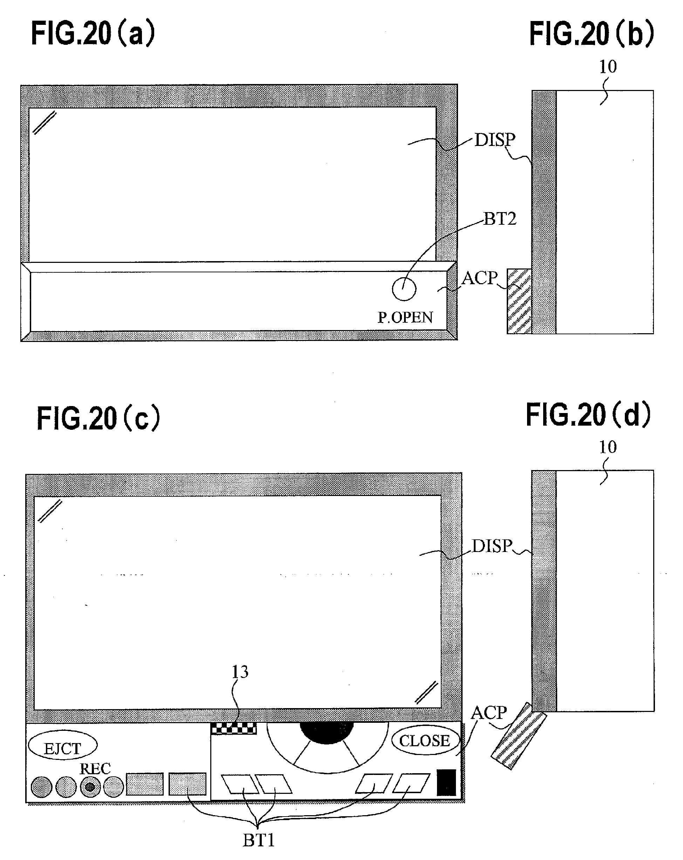

FIG. 20 shows front views and side views of the electronic apparatus according to a second embodiment. Hereafter, as an example of the electronic apparatus, an AVN unit, which is an onboard electronic apparatus having audio system, television receiver, and car navigation system integrated therein is described. In FIG. 20 (a) , a front view of the AVN unit of which operation panel ACP is in a closed state, and in FIG. 20 (b) , the side view thereof are shown, respectively. Further, in FIG. 20 (c), the front view in an open state is shown, and in FIG. 20 (d), the side view thereof is shown.

A display panel DISP constituted of a liquid crystal display panel DISP, an organic EL panel, or the like, is mounted on a front face of amainbodyportion 10 in a tiltable (inclinable) manner, and on the lower end portion of the above display panel DISP, an operation panel ACP is mounted in a tiltable manner. In FIG. 20(c), the operation panel ACP is configured to be tiltable by part of a tilting part 13 constituted of a drive part such as a motor which enables rotating motion by axially supporting the operation panel ACP on the display panel DISP. Here, the operation panel ACP is mounted on the lower end portion of the display panel DISP, which however signifies to be mounted on one end of the front face of main body portion 10.

On the back face of the operation panel ACP which is exposed to the user side when being in a closed state, an open operation button BT2 for tilting the operation panel ACP in the openingdirection (FIG. 20 (a) ) , and on the surface side of the operation panel ACP exposed to the user side, which is exposed at the open state thereof, there are provided a close operation button CLOSE for tilting the operation panel ACP in the closing direction, an eject operation button EJCT for tilting the display panel DISP to a fully open state so as to expose the front face side of main body portion 10, and a plurality of operation buttons BT1 for audio system, television receiver, car navigation system, etc. (FIG. 20 (c))

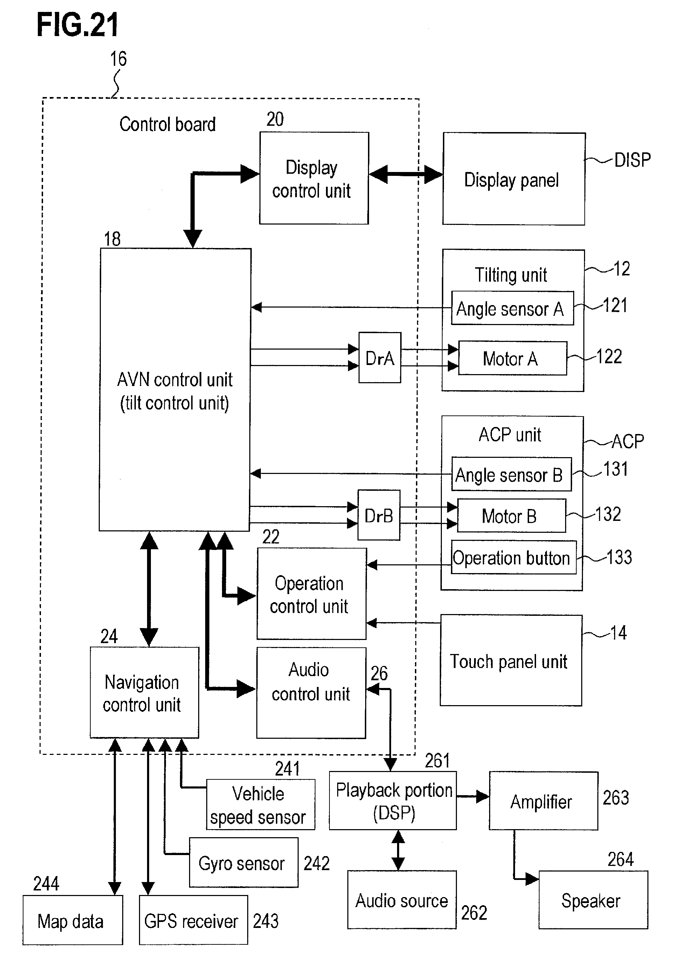

FIG. 21 shows a schematic configuration diagram of the AVN unit according to the second embodiment. The AVN unit is constituted of main body portion 10, display panel DISP and operation panel ACP, as described earlier. On main body portion 10, there is provided a control board 16 for controlling the display panel DISP and the operation panel ACP. Control board 16 includes a display control unit 20 for controlling the display panel DISP to display, an operation control unit 22 for controlling operation on the operation panel ACP, a navigation control unit 24 for controlling a car navigation system, an audio control unit 26 for controlling an audio system, an AVN control unit (tilt control part) 18 for performing a variety of kinds of control including tilt motion control of the display panel DISP and the operation panel ACP, a driver DrA for driving a motor A 122 in a tilting unit 12 of the display panel DISP, and a driver DrB for driving a motor B 132 of the operation panel ACP.

Tilting unit 12 for driving to tilt the display panel DISP includes an angle sensor A 121 for detecting an angle of the display panel DISP from main body portion 10, and a tilting motor 122 for tilting the display panel DISP. A detected angle signal from angle sensor A 121 is supplied to AVN control unit 18, and corresponding to a drive signal from the above unit 18, motor 122 is driven to the forward direction and the backward direction by part of a drive signal from the driver DrA.

An ACP unit includes an angle sensor B 131 for detecting a tilt angle of the operation panel ACP relative to main body portion 10, a motor 132 for tilting, and operation buttons 133 shown in Fig. 20, and a detected angle signal by angle sensor B 131 is supplied to AVN control unit 18, and corresponding to a drive signal from the above unit 18; motor B 132 is driven to the forward direction and the backward direction by part of a drive signal from the driver DrB.

An operation signal from operation button 133 is supplied to AVN control unit 18 via operation control unit 22. Moreover, an operation signal from a touch panel unit 14 provided on the display panel DISP is also supplied to AVN control unit 18 via operation control unit 22.

To navigation unit 24, there are supplied a map data 244 stored in a receiving media such as a hard disk and DVD, a GPS signal from a GPS receiver unit 243 mounted on the car navigation system, an inclination angle signal from a gyro sensor 242, and a vehicle speed signal from an onboard vehicle speed sensor (vehicle speed sensing part) 241. The above signals are supplied to AVN control unit 18 from navigation unit 24.

Audio control unit 26 supplies an audio signal from an audio playback portion 261 to AVN control unit 18. Playback portion 261 fetches an audio signal from an audio source 262, so as to supply to an amplifier 263, and a speaker 264 outputs audio sound based on the above signal amplified by amplifier 263.

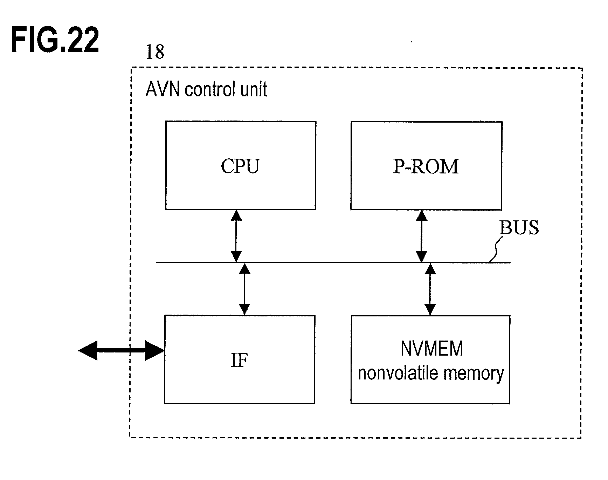

FIG. 22 shows a configuration diagram of AVN control unit 18 according to the present embodiment. AVN control unit 18 is a processor constituted of, for example, a general-purpose microprocessor or ASIC (Application Specific Integrated Circuit), including a central processing unit CPU, a programmemory P-ROM having a control program stored therein, an interface IF, and a nonvolatile memory NVMEM (memory part), which are connected via an internal bus BUS.

The program memory P-ROM stores a tilt control program for the operation panel ACP described later. Further, in the nonvolatile memory NVMEM, there is initially set an initial tilt angle relative to the main body front face portion when AVN control unit 18 opens the operation panel ACP from a closed state (FIG. 20 (a), FIG. 20 (b)) to an open state (FIG. 20 (c), FIG. 20 (d)) in response to a signal from the operation button, and further, a target angle of the operation panel ACP relative to the front face portion of main body portion 10 is stored so as to specify the end point of the tilt motion, in the cases that the operation panel ACP makes a variety of tilt motions from the above-mentioned initial tilt angle.

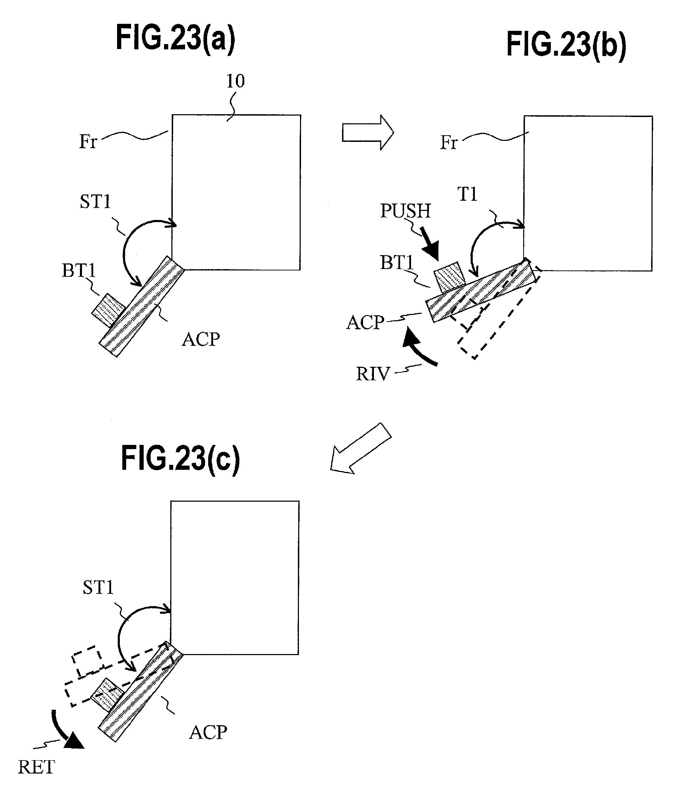

Hereinafter, in FIGS. 23 through 31, the tilt motion of the operation panel ACP in the second embodiment will be described. Here, the tilt motion of the display panel DISP is omitted, and the display panel DISP is not illustrated because of a state of being fixed to the main body front face portion, and the tilt motion of the operation panel ACP relative to the main body will be illustrated.

FIG. 23 shows diagrams explaining tilt motion to press back in response to a depression of an operation button. FIG. 23 (a) illustrates an open state of the operation panel ACP from a main body front face portion Fr, with an initial tilt angle ST1 being set in the nonvolatile memory NVMEM. From the above state, as shown in FIG. 23 (b), when a user (driver) depresses a button BT1 on the operation panel ACP along the arrow PUSH, the depression signal from operation button 133 is supplied to AVN control unit 18 via an operation control unit 22, and the unit concerned tilts the operation panel ACP to a position of a predetermined target angle T1 in the direction to press back the operation panel ACP against the button depression, as shown by an arrow RIV, namely, in the direction to move the operation panel ACP closer to the main body front face portion Fr. Then, when the user (driver) stops depressing the button, the operation panel ACP is automatically restored to the original position before the start of tilting, as shown by the arrow RET in FIG. 23(c).

With the above-mentioned tilt motion, the user obtains a sense of touch of being pressed back by the operation panel ACP in response to the button depression, which enables the user to recognize completion of an effective input through the button operation, and thus, the operability is improved, and the user can feel interested.

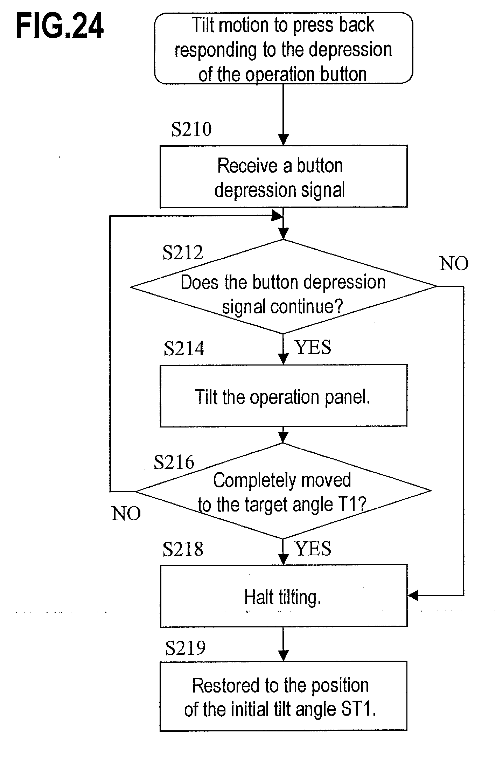

FIG. 24 shows a flowchart of tilt motion control for pressing back in response to a depression of an operation button. The above tilt motion control is performed by a control program in AVN control unit 18. Operation button 133 receives a button depression signal of the user (driver) (S210), and while the depression signal continues (YES in S212), the tilt motion of the operation panel ACP is performed (S214). The above tilt motion is performed by driving the motor in the tilting unit of the operation panel ACP, and on completion of the movement to the predetermined target angle T1 relative to the main body front face portion Fr stored in the nonvolatile memory NVMEM (YES in S216), the tilt motion is suspended (S218), so as to restore to the position of the initial tilt angle ST1 being initially set in the nonvolatile memory NVMEM (S219) . On the halfway of the tilt motion, even when the movement to the target angle is not completed (NO in S216), if the button signal disappears (NO in S212), the tilt motion is suspended (S218), and the restoration to the position of the initial tilt angle ST1 is made (S219). Therefore, even if the button depression is continued, the tilt motion is halted at the predetermined target angle, and it is not that the operation panel ACP is tilted to the closed position of the main body front face portion Fr.

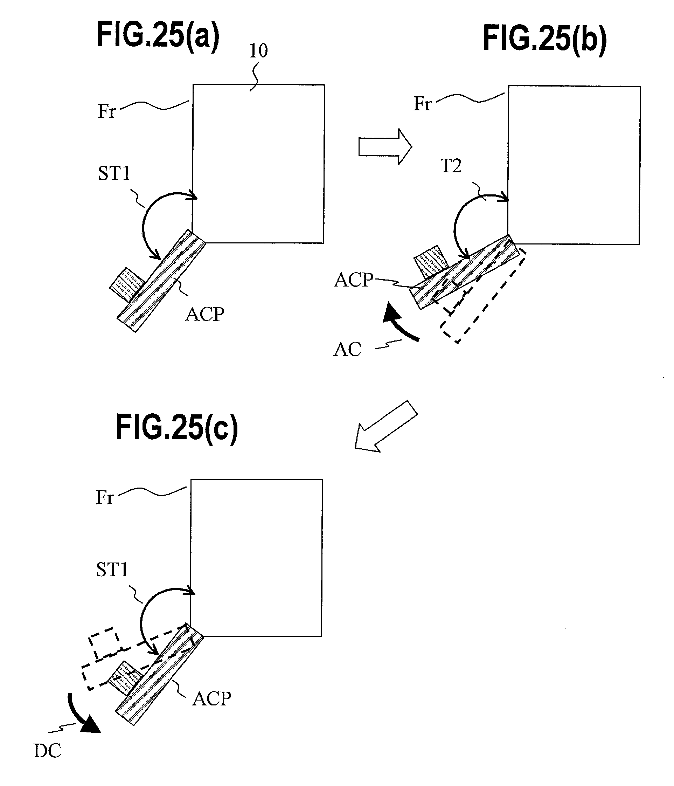

FIG. 25 shows diagrams explaining tilt motion corresponding to the acceleration and the deceleration of the vehicle. FIG. 25 (a) illustrates a state that operation panel ACP is open to the initial tilt angle ST1 relative to the main body front face portion Fr being set in the nonvolatile memory NVMEM. From the above state, when the user (driver) accelerates the vehicle, a speed signal is supplied from vehicle speed sensor 241 to AVN control unit 18 via navigation control unit 24, and on deciding acceleration, the unit concerned tilts the operation panel ACP in the direction to move closer to the main body front face portion Fr, as shown by an arrow AC in FIG. 25(b), so as to tilt to the position of the predetermined target angle T2 relative to the main body front face portion Fr. Further, when the user (driver) decelerates, AVN control unit 18 decides deceleration from the vehicle speed, and tilts the operation panel ACP so as to restore to the position of the initial tilt angle ST1 before the start of tilting, as shown by an arrow DC in FIG. 25(c).

With such the tilt motion, even when the upper body of the user (driver) inclines backward due to the effect of the acceleration accompanying the vehicle acceleration, the operation panel ACP is tilted in front of the user (driver), which facilitates the operation of the operation panel ACP . Also, evenwhentheupperbodyoftheuser (driver) inclines forward accompanying the deceleration, the operation panel ACP is also tilted forward, by which the operation panel ACP can be maintained at an angle easy for operation by the user (driver). Further, since the user (driver) can obtain feedback of the operation panel ACP being tilted in response to the drive operation of vehicle acceleration/deceleration, and the user can be interested.

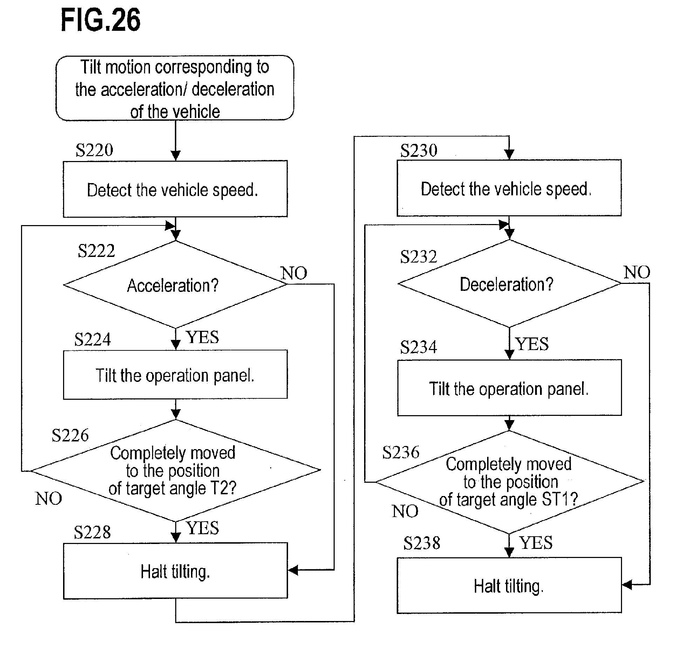

FIG. 26 shows a flowchart of tilt motion control corresponding to the acceleration and the deceleration of the vehicle. The vehicle speed supplied from vehicle speed sensor 241 via navigation control unit 24 is detected (S220) , and in case that the speed is increased (accelerated) (Yes in S222), the tilt motion of the operation panel ACP is performed to a predetermined target angle stored in the nonvolatile memory NVMEM (S224, YES in S226). However, even before the operation panel ACP is completely moved to the target angle, in case that the acceleration is suspended (NO in S222), the tilt motion is halted (S228). Therefore, even if the depression of the button is continued, the tilt motion is halted at the predetermined target angle, and it is not that the operation panel ACP is tilted to the closed position of the main body front face portion Fr.

Also, oppositely, the vehicle speed supplied from vehicle speed sensor 241 via navigation control unit 24 is detected (S230) and in case that the speed is decreased (decelerated) (Yes in S232), the tilt motion of the operation panel ACP is performed to a tilt angle initially set in the nonvolatile memory NVMEM (S234, YES in S236). However, even before the operation panel ACP is completely restored to the tilt angle being initially set, in case that the deceleration is suspended (NO in S232), the tilt motion is halted (S238).

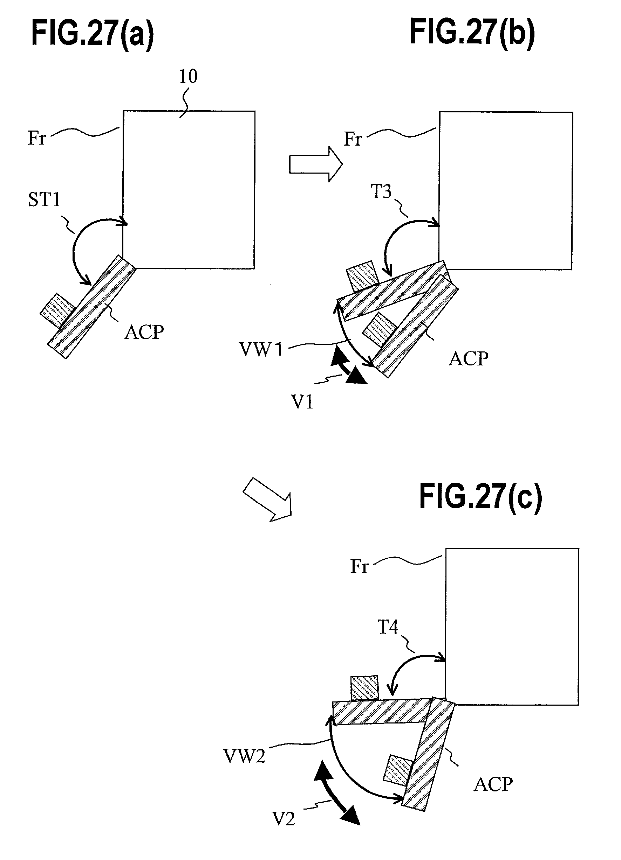

FIG. 27 shows diagrams explaining tilt motion corresponding to an audio signal. FIG. 27(a) illustrates that the operation panel ACP is in an open state to an initial tilt angle ST1 relative to the main body front face portion Fr being set in the nonvolatile memory NVMEM. In the above state, AVN control unit 18 obtains the audio signal supplied via the audio control unit.

Then, for example, when the sound pressure in a low tone region exceeds a predetermined threshold, the operation panel ACP is tilted in the direction to move closer to the front face portion Fr of the main body, so as to be tilted to the position of a predetermined target angle T3 relative to the main body front face portion Fr, as shown by an arrow V1 in FIG. 27 (b), and also alternately, in the direction to move away from the main body front face portion Fr. Thus, the operation panel ACP is tilted continuously in a reciprocating manner between the position of the initial tilt angle ST1 and the position of the target angle T3, with amplitude VW1.

Also, when the sound pressure in a high tone region exceeds a predetermined threshold, the operation panel ACP is tilted in the direction to move closer to the main body front face portion Fr, so as to be tilted to the position of the predetermined target angle T4 relative to the main body front face portion Fr, as shown by an arrow V2 in FIG. 27 (c) , and further, by alternately tilting in the direction to move away from the front face portion Fr, the operation panel ACP is tilted continuously in a reciprocating manner between the position of the initial tilt angle ST1 and the position of the target angle T4, with amplitude VW2.

Here, the target angle T3 is greater than T4, and the amplitude VW2 is greater than the amplitude VW1, and therefore, with the above tilt motion, the user (driver) can get fun from the operation panel ACP being tilted to the music output from the audio system, with various amplitude magnitudes.

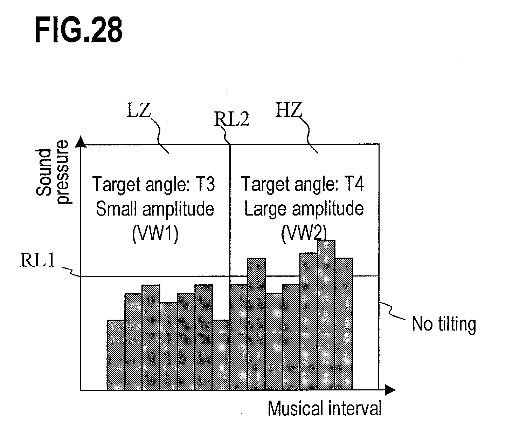

FIG. 28 shows a diagram explaining the relationship of correspondence between the audio signal and the target angle. There is shown the relationship with the target angle by representing a musical interval on the horizontal axis, and a sound pressure on the vertical axis. Here, each bar graph represents the sound pressure for each musical interval. For example, let a musical interval of RL2 or higher be a high tone range HZ, a musical interval lower than the above be a low tone range LZ, and a threshold of the sound pressure be RL1. Now, when the sound pressure exceeding the threshold RL1 is detected in the low tone range LZ, the target angle becomes T3, and the tilt motion is performed with small amplitude VW1. Also, when the sound pressure exceeding the threshold RL1 is detected in the high tone range HZ, the target angle becomes T4, and the tilt motion is performed with large amplitude VW2. Additionally, when the sound pressures exceeding the threshold RL1 are detected in both the low tone range and the high tone range, the tilt motion having a target angle T4 is performed with the large amplitude VW2. Such the relationship of correspondence is stored in the nonvolatile memory NVMEM, and AVN control unit 18 tilts the operation panel ACP with amplitude according to the audio signal. Additionally, the above-mentioned relationship between the aforementioned musical interval or sound pressure and the target angle of the tilt motion is an example, and a variety of sets of relationship of correspondence are settable.

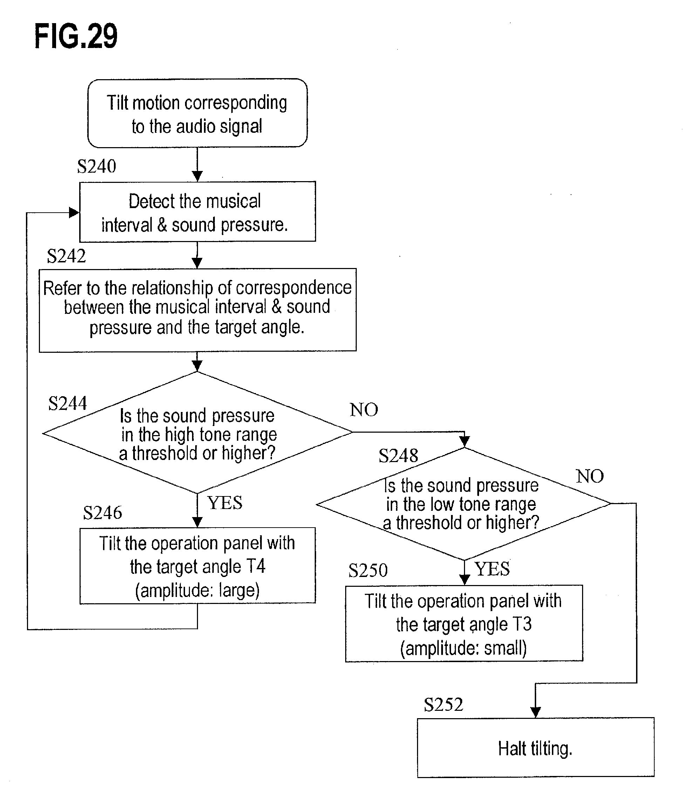

FIG. 29 shows a flowchart of tilt motion control corresponding to the audio signal. AVN control unit 18 obtains an audio signal supplied via audio control unit 26, and detects a musical interval and a sound pressure in each musical interval (S240). Then, referring to the relationship of correspondence shown in FIG. 28, which is stored in the nonvolatile memory NVMEM (S242), in case that the sound pressure in the high tone range exceeds a predetermined threshold (YES in S244), the tilt motion is performed in a reciprocating manner, with the target angle oftheoperationpanelACPsettoT4 (great amplitude) (S246). In case that the sound pressure in the high tone range does not exceed a predetermined threshold (NO in S244), and that the sound pressure in the low tone range exceeds the predetermined threshold (Yes in S248), the tilt motion is performed in a reciprocating manner, with the target angle of the operationpanelACP set to T3 (small amplitude) (S250). In any tilt motion, the tilt motion is halted when the sound pressures in the high tone range and the low tone range become less than the threshold (S252).

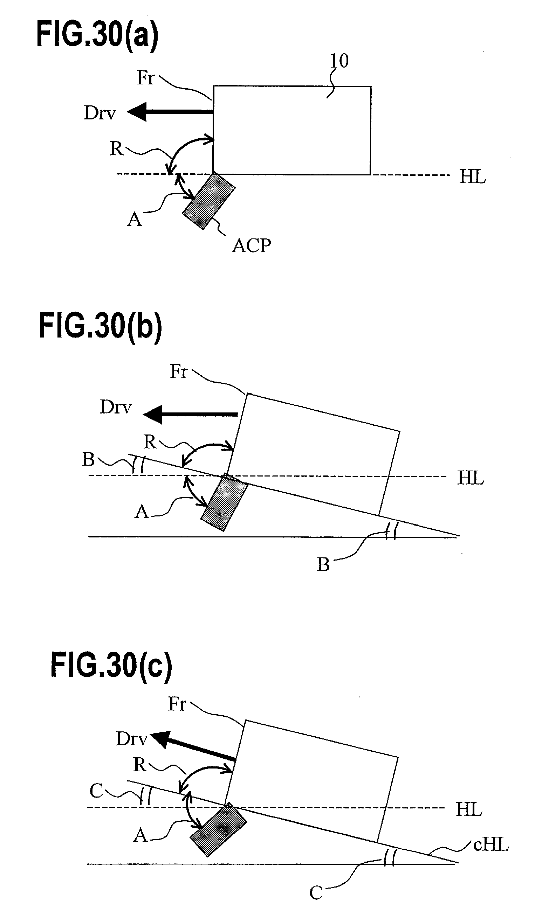

FIG. 30 shows diagrams explaining the correction operation of an initial tilt angle corresponding to an inclination of the AVN unit main body at the time of startup. In response to a startup command by the user, the operation panel ACP is open to the initial tilt angle being set in the nonvolatile memory NVMEM. However, if the AVN unit main body is inclined, the position of the operation panel ACP being open to the initial tilt angle being referenced to the main body front face portion is not necessarily appropriate for the user (driver). Therefore, it becomes necessary to correct the initial tilt angle according to the inclination of the AVN unit main body. As the factors to cause the inclination of the AVN unit, there are considered a case that the AVN unit is mounted in an inclined manner because of the different specification of the instrument panel on a vehicle-by-vehicle basis, and a case that the road surface on which the vehicle is located is inclined. Hereafter, each case will be described referring to the drawings.

FIG. 30(a) illustrates a state that, when AVN unit main body portion 10 is mounted with no inclination from the horizontal plane HL, the operation panel ACP is open to the initial tilt angle being initially set in the nonvolatile memory NVMEM, in response to the startup command from the user. Namely, the initial tilt angle ST1 is the sum of an angle R, which is formed by the front face of main body portion 10 and the horizontal plane HL, and an angle A formed by the horizontal plane HL and the operation panel ACP. Here, an arrow Drv represents the direction facing the user (driver), which is parallel to the horizontal plane HL, and accordingly, the position being tilted downward from the horizontal plane HL (arrow Drv) by the angle A is a position that the operation panel ACP is tilted to the initial tilt angle.

Next, when AVN unit main body portion 10 is mounted with an inclination from the vehicle, a state of the operation panel ACP, being inclined by an angle B in response to the startup command from the user, is shown in FIG. 30(b). AVN unit main body portion 10 is in an open state by an angle B from the horizontal plane HL. However, the arrow Drv facing the user (driver) is parallel to the horizontal plane HL, and the angle of the operation panel ACP to be a reference for the user (driver) is a position being tilted downward by the angle A, as shown in FIG. 30 (a). Therefore, by adding the tilt angle relative to the horizontal plane HL to the angle R relative to the main body front face portion Fr, and by tilting the operation panel ACP to an angle in which the angle A is added further, the position of the operation panel ACP for the user (driver) becomes equivalent to the reference position shown in FIG. 30 (a) .

Therefore, in the above case, an inclination angle signal detected by gyro sensor 242 mounted on the car navigation system is supplied to AVN control unit 18 via navigation control unit 24, and after modifying the initial tilt angle being initially set in the nonvolatile memory NVMEM by adding the angle B, the above unit tilts the operation panel ACP to an initial tilt angle after modification.

Next, using the state shown in FIG. 30 (a) as a criterion, when the vehicle is positioned on an inclined road surface, a state of the operation panel ACP, being open in response to the startup command by the user, is shown in FIG. 30(c) . Because the road surface is inclined by an angle C from the horizontal plane HL, AVN unit main body portion 10 is also in a state of being inclined by the angle C from the horizontal plane HL. However, the different point from the state shown in FIG. 30 (b) is that, because the vehicle is inclined as a whole, the arrow Drv facing the user (driver) on board is not parallel to the horizontal plane HL. That is, the horizontal plane for the user (driver) is a plane cHL being inclined by the angle C from the absolute horizontal plane HL, and the reference position of the operation panel ACP for the user (driver) is a position inclined by the angle A downward from the plane cHL. Therefore, in the above case, by tilting the operation panel ACP to the summed angle of the angle A and the angle R relative to the main body front face portion Fr based on the initial tilt angle, the operation panel ACP is tilted downward by the angle A from the plane cHL, and accordingly, the initial tilt angle is not modified.

AVN control unit 18 obtains a position information signal from GPS receiver unit 243 via navigation control unit 24, in addition to the inclination angle signal detected by gyro sensor 242, and by referring to a map data, AVN control unit 18 can grasp the vehicle position, and can decide whether the parking position is on a level or an incline. Therefore, when the inclination of the AVN unit is detected by gyro sensor 242, if the vehicle parking position is on a level ground, it can be decided that the inclination is caused by the unit of which mounting is made with inclination, as shown in FIG. 30 (b). However, as shown in FIG. 30 (c) , when the inclination is possibly caused by the inclined road surface because of the parking position on the inclined ground, the initial tilt angle being initially set in the nonvolatile memory NVMEM is not modified.

As described above, by detecting the inclination of the main body at the time of initiating the AVN unit, it becomes possible to modify the initial setting of the tilt angle of the operation panel ACP appropriate to the user (driver). Therefore, the operability is improved because the angle at the time of opening the operation panel ACP is maintained in an appropriate angle for the user (driver) .

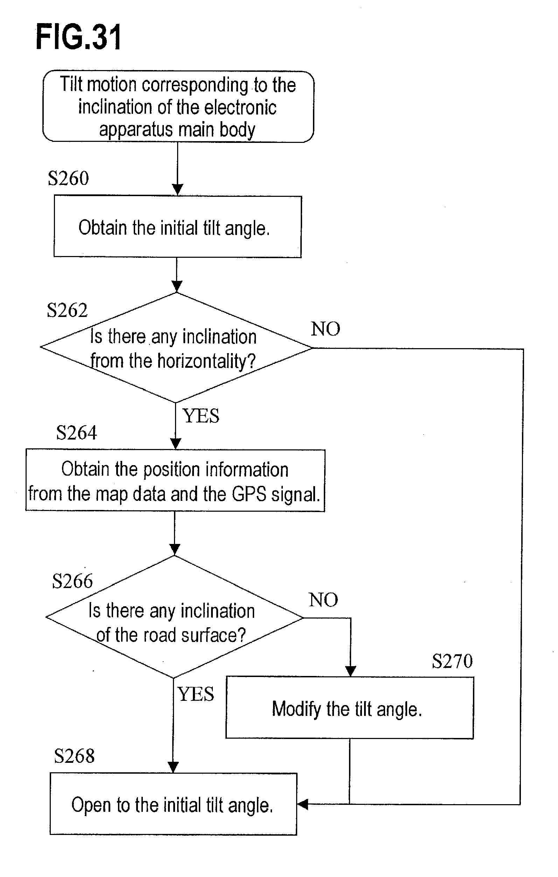

FIG. 31 shows a flowchart of correction operation control corresponding to the inclination of the AVN unit main body at the time of startup. First, AVN control unit 18 obtains the tilt angle of the operation panel ACP initially set in the nonvolatile memory NVMEM (S260). Next, from the inclination angle signal supplied from gyro sensor 242 via the navigation control unit, the inclination of AVN unit main body portion 10 is decided. If there is no inclination (NO in S262), the tilt angle initially set in the nonvolatile memory NVMEM is not modified, so as to tilt to the initial tilt angle (S268), while if there is inclination (YES in S262) the vehicle position information is obtained based on a map data and a GPS signal (S264). Then, when the vehicle is positioned on the inclined ground (YES in S266), there is a large possibility of the inclination being affected by the incline of the road surface, and therefore, the operation panel ACP is tilted without modifying the initial tilt angle initially set in the nonvolatile memory NVMEM (S268). Also, if there is no incline of the road surface and the inclination is caused by the mounting way of the unit main body (NO in S266), the tilt angle being initially set is modified (S270), and the operation panel ACP is tilted to the initial tilt angle after the modification (S268).

As described above, according to the present invention, it is possible to arouse interest of the user (driver) in the vehicle drive operation, with improved operability of the AVN unit.

### (Third embodiment)

In the third embodiment, a display panel DISP of an electronic apparatus, a display panel having a display disposed on the front face portion, and an operation panel having an operation panel face are exemplarily shown, and there is described the rotation control of the operation panel when the operation panel is mounted in a rotationally movable manner relative to the display panel DISP following the rotation of a predetermined rotation axis, so that the operation panel face of the operation panel is opened and closed relative to the display disposed on the front face portion of the display panel. The rotation control of the operation panel is realized by, for example, the execution of a predetermined control program by a non-illustrated computer control part. Further, in the rotation control, the operation panel position and the movement length is obtained in the form of angle, but the angle is handled as being included in the position and the length in the present invention.

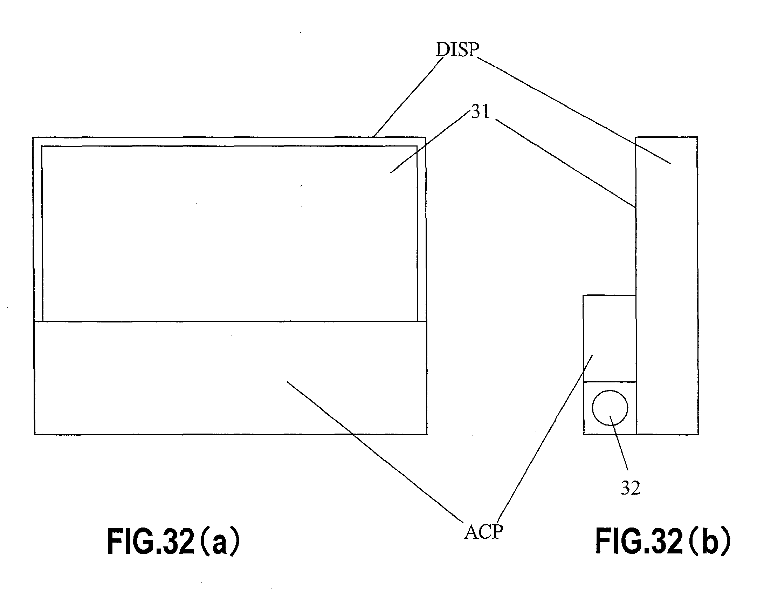

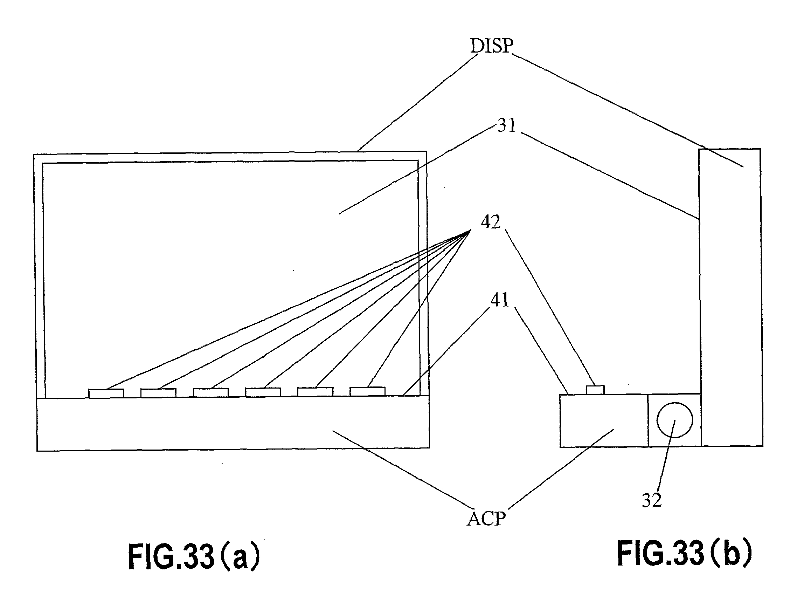

FIGS. 32 and 33 show front views and side views of the display panel DISP and the operation panel ACP constituting the electronic apparatus according to the third embodiment of the invention. FIG. 32 shows the front view (FIG. 32(a)) and the side view (FIG. 32(b)) of the operation panel ACP being in a closed state relative to the display panel DISP. Also, FIG. 33 shows the front view (FIG. 33 (a) ) and the side view (FIG. 33 (b)) of the operation panel ACP being in an open state relative to the display panel DISP.

In an OFF state in which the electronic apparatus is not in use, the operation panel ACP having an operation panel face 41 is in a closed state (the angle of the display panel DISP from a display 31 is 0 degree), while in an ON state, the operation panel ACP is moved, through motor drive, to the position of 90 degrees rotated from display 31 of the display panel DISP, thereby becoming an open state in which the user can operate buttons 42 on operation panel face 41. The angle of the operation panel ACP becoming the open state may not be fixed to 90 degrees, and instead, an arbitrary angle is settable based on a user taste. Typically, the operation panel ACP may be rotatable to an arbitrary angle exceeding 90 degrees (for example, 180 degrees maximum). Additionally, a rotation axis 32, being fixed to the display panel DISP, is intended to detect the position of the operation panel ACP, as will be described later.

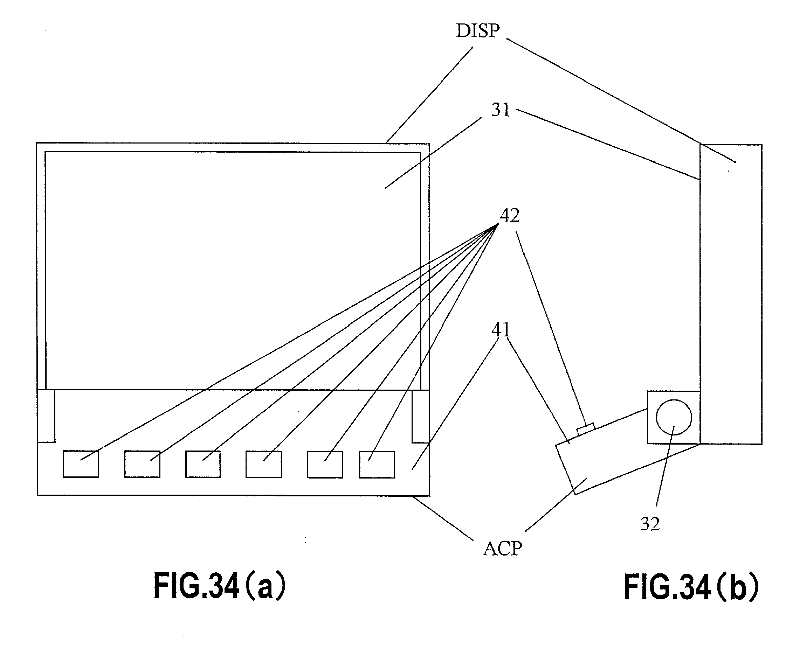

FIG. 34 shows another front view (FIG. 34(a)) with a side view (FIG. 34(b)), illustrating an open state of the operation panel ACP of the electronic apparatus, according to the third embodiment of the invention, which illustrate a state of the operation panel ACP being rotated up to a position exceeding 90 degree from the display panel DISP.

The angle of the operation panel ACP from display 31 can be detected by part of a linear sensor (moving amount sensor) of a sliding variable resistor, as having been described in the article of the third prior art. The non-illustrated computer control part obtains a rotation angle of the operation panel ACP, based on the output voltage of the linear sensor. When the electronic apparatus is switched from the OFF state to the ON state, first, the operation panel ACP is rotated from 0 degree to 90 degrees, that is, a default open position, and on reaching 90 degrees, the rotation of the operation panel ACP is halted. Further, when the operation panel ACP is to be rotated to an arbitrary angle exceeding 90 degrees, the operation panel ACP is further rotated to a desired open position through a predetermined operation, at which a rotation halt operation is performed. Then, the above open position is stored into, for example, a memory, so that the rotation is performed automatically to the above-mentioned open position from the next time. Also, it may be possible that, through the input of a desired angle, the operation panel ACP be rotated to the above input angle. As such, since the operation panel ACP is not halted in a range (a first tilt angle range) from 0 degree less than the degree of the default open position among the rotation range of the operation panel ACP, in the above first range, the necessity of detecting the rotation angle of the operation panel ACP with high accuracy is relatively small. On the other hand, in an angle range (a second tilt angle range) from the default open position angle to the maximum rotation angle, it is necessary to detect the rotation angle with high accuracy, because the stop position of the operation panel ACP exists therein.

Therefore, according to the third embodiment, the sliding amount of the actuator of the linear sensor per unit angle is varied between in the range from 0 degree to less than the default open position (the first tilt angle range) and in the range from the default open position to the maximum rotation angle (the second tilt angle range). Typically, the sliding amount of the actuator per unit angle in the second tilt angle range, which requires high detection accuracy, is set greater than the sliding amount of the actuator in the first tilt angle range. In such a way, by reducing the actuator sliding amount in the first tilt angle range not requiring high detection accuracy, while increasing the actuator sliding amount in the second tilt angle range requiring high detection accuracy, it becomes possible to obtain miniaturization of the linear sensor, compatibly with high accuracy by restraining the dispersion in the detection voltage of the linear sensor and the structural dispersion.

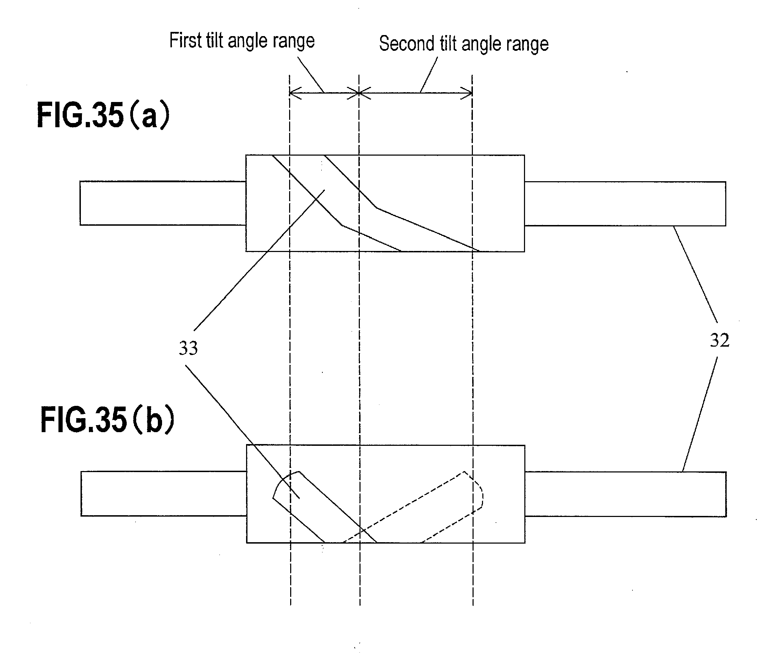

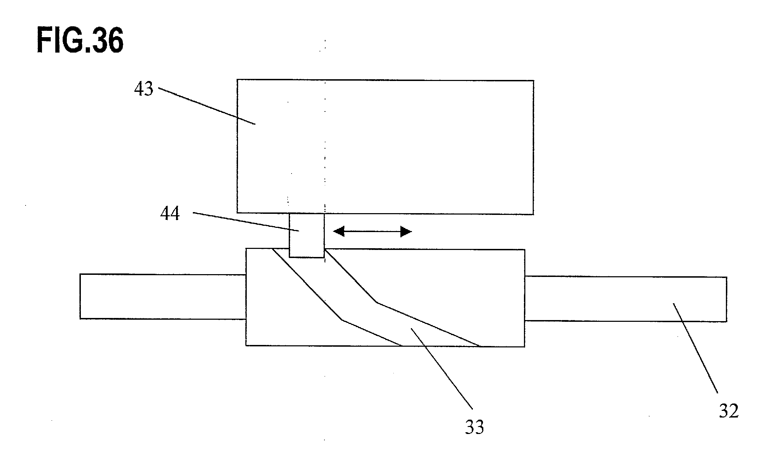

FIG. 35 shows diagrams illustrating rotation axis 32 for detecting the position of the operation panel ACP of the electronic apparatus, according to the third embodiment. Also, FIG. 36 shows a diagram illustrating a state of a rotation axis 32 being engaged with an actuator 44 (moving part) of a sliding variable resistor 43.As shown in FIG. 35, a spiral-shaped groove 33 is formed on rotation axis 32, and in order to obtain a different sliding amount per unit angle in regard to actuator 44 of liner sensor 43 being engaged with the above groove 33, the groove is formed in such a manner that the pitch of groove 33 corresponding to the second tilt angle range is greater than the pitch of groove 33 corresponding to the first tilt angle range. As such, by adjusting the pitch intervals of the groove engraved on the rotation axis, it becomes possible to form the sliding amount of actuator 44 per unit angle to be relatively small in the first tilt angle range, and relatively large in the second tilt angle range.

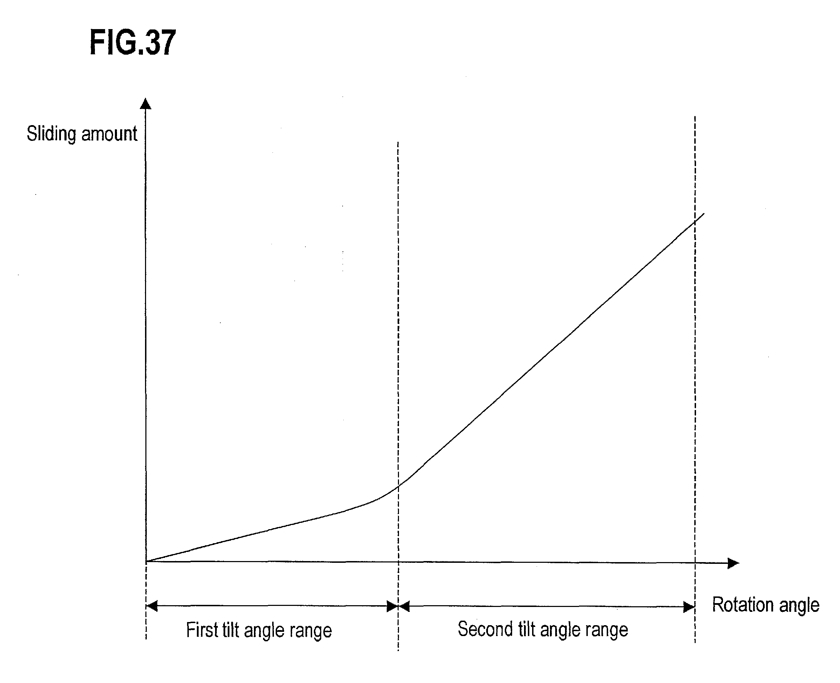

FIG. 37 shows a characteristic diagram illustrating the relationship between the rotation angle of the operation panel ACP and the sliding amount of the actuator, according to the third embodiment. As shown in FIG. 37, the sliding amount per unit angle is different in between the first tilt angle range and the second tilt angle range. However, in order to avoid an abrupt change of the sliding amount on the boundary between the first tilt angle range and the second tilt angle range, a characteristic having a continuous change of the sliding amount is applied, using a certain width in the vicinity of the boundary.

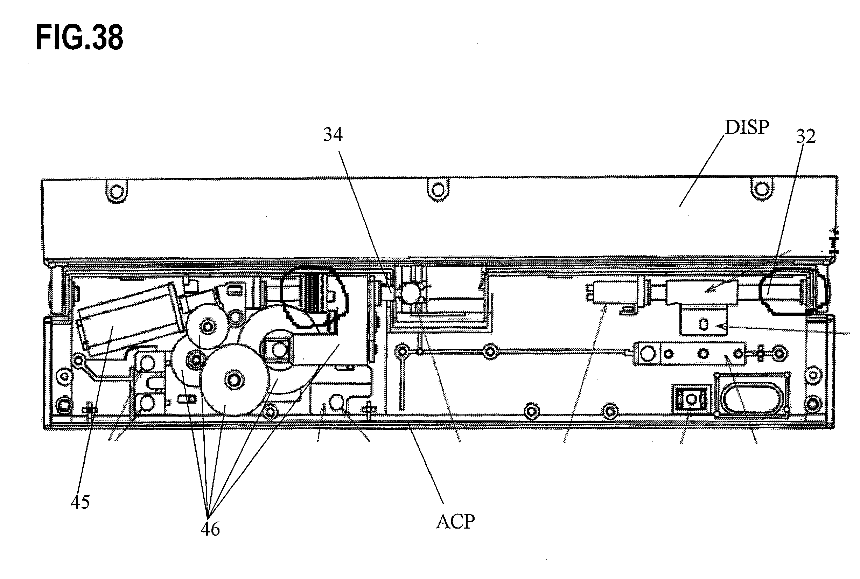

FIG. 38 shows a diagram illustrating an internal structure of the operation panel ACP of the electronic apparatus, according to the third embodiment. In Fig. 38, the operation panel ACP has a motor 45 incorporated therein, so that the power of motor 45 rotates a gear group 46. The operation panel ACP is rotated by transmitting the driving force of motor 45 to another rotation axis 34 being fixed to the display panel DISP, via gear group 46.

Further, rotation axis 32 for detecting the position of the operation panel ACP shown in the above FIGS. 35, 36 is fixed to the displaypanel DISP, and when the operation panel ACP is rotated by driving motor 45, groove 33 (not shown in FIG. 38) of rotation axis 32 is rotated, and actuator 44 of linear sensor 43 is slid to the axial line direction of rotation axis 32, and according to the sliding amount thereof, the output voltage of linear sensor 43 is varied.

The non-illustrated computer control part mounted on the electronic apparatus obtains the rotation angle of the operation panel ACP, based on the output voltage of linear sensor 43, and performs rotation/halt control of the operation panel ACP. For example, with the provision of a table having output voltages from linear sensor 43 and the rotation angles of the operation panel ACP corresponding thereto, the computer control part obtains the rotation angle of the operation panel ACP, based on the above table.

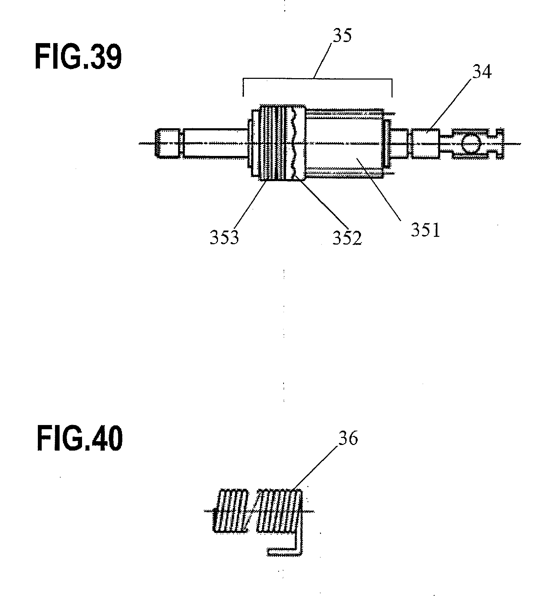

Additionally, in FIG. 38, a ratchet cam mechanism 35 is provided on rotation axis 34 to which the driving force of motor 45 is transmitted. FIG. 39 shows a configuration diagram of rotation axis 34 having ratchet cam mechanism 35. Ratchet cam mechanism 35 is constituted of the assembly of a gear 351, a ratchet cam 352, a plurality of belleville springs 353, etc., being centered on rotation axis 34. By providing such ratchet cam mechanism 35, it is possible to prevent the rotation mechanism of the operation panel ACP from breakage when a strong force is applied to the operation panel ACP in the downward direction. When ratchet cam 352 slips, the open angle of the operation panel ACP is varied, but it is possible to automatically restore to the original state. Namely, even when the open angle of the operation panel ACP is varied due to the slippage of ratchet cam 352, the actuator of the linear sensor slides following the above slippage, and the computer control part can recognize the angle variation amount, and through the motion to restore by the above variation amount, it is possible to automatically restore the operation panel ACP to the original position.

Further, in FIG. 38, there is provided a spring 36 for absorbing the backlash (play) of the gear. FIG. 40 shows a configuration diagram of spring 36 for absorbing the backlash. In the present example, spring 36 is a helical coil spring. To spring 36, a force is applied in an opening direction, and as the open angle becomes large, the spring force becomes reduced, which causes a risk such that the backlash cannot be absorbed sufficiently when the open angle becomes relatively large. Therefore, in the rotation control by the computer control part, when the open angle is a predetermined angle or larger, the operation panel ACP is rotated in the opening direction up to an angle substantially larger than a target angle, and then halted after reversely rotated to a closing direction. Through the above reverse motion in the closing direction, the backlash is absorbed, and thus, the accuracy in the stop position of the operation panel ACP can be improved. For example, the control concerned is executed to the open angle of 120 degrees or more, and when the target open angle is 120 degrees, after rotating to open to the order of 122-123 degrees, the reverse rotation in the closing direction is executed, which is then halted at 120 degrees.

Also, normally, there is a tendency that the open and close speed of the operation panel ACP becomes faster in the gravity direction, namely in the opening direction, and by providing the above spring 36 for applying a force in the opening direction, the speed in the direction of the force being applied by the spring (that is, the opening direction) becomes faster. Accordingly, in order to make uniform the opening speed and the closing speed of the operation panel ACP, the motor current may be varied depending on the rotation direction is such a way as setting the motor current in the direction of fastening the speed (opening direction) to be smaller than the current for rotating in the reverse direction (closing direction), so that the above both speeds become substantially equal. For example, using the output voltage of linear sensor 43 to detect the angle of the operation panel ACP, by deciding whether the output voltage variation is positive or negative, thereby detecting whether the rotation direction is the opening direction or the closing direction, the computer control part controls the magnitude of the motor current, according to the detected rotation direction.

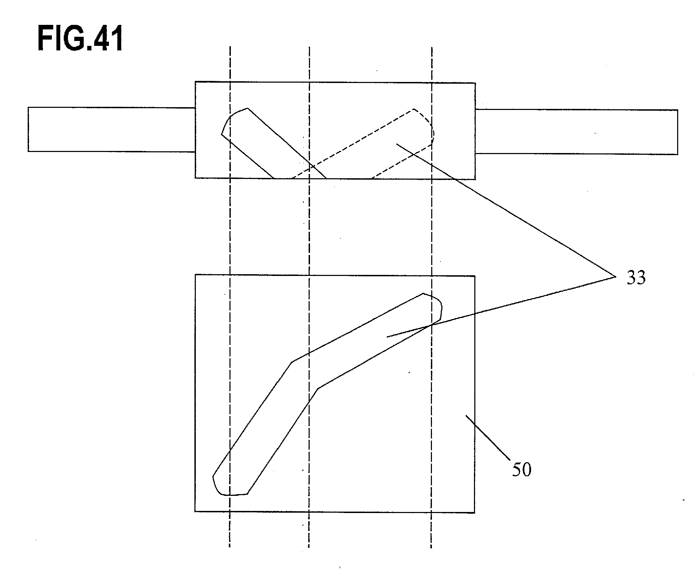

In the aforementioned third embodiment, there has been exemplified a case of rotational movement of the operation panel ACP, but it is also applicable to a case that the operation panel ACP moves linearly on a plane. In such the case, groove 33, which is linearly engaged with actuator 44 of linear sensor 43, is not the spiral-shaped groove provided on the rotation axis, but instead, for example, groove 33 of different inclination angle provided on a plate board 50 may be formed, as exemplarily shown in FIG. 41. Additionally, in FIG. 41, there is exemplified the groove provided on plate board 50, correspondingly to spiral-shaped groove 33 shown in FIG. 4.

### (Fourth embodiment)

In the fourth embodiment, there is exemplarily shown an electronic apparatus for vehicle mounting, etc., including a display panel having a display disposed on the front face portion thereof and an operation panel having an operation panel face, with a structure such that the operation panel is attached to be rotationally movable relative to the display panel following the rotation of a predetermined rotation axis so that the operation panel face of the operation panel is opened and closed relative to the display disposed on the front face portion of the display panel, and the display indication content is switched depending on the open state or the closed state of the operation panel.

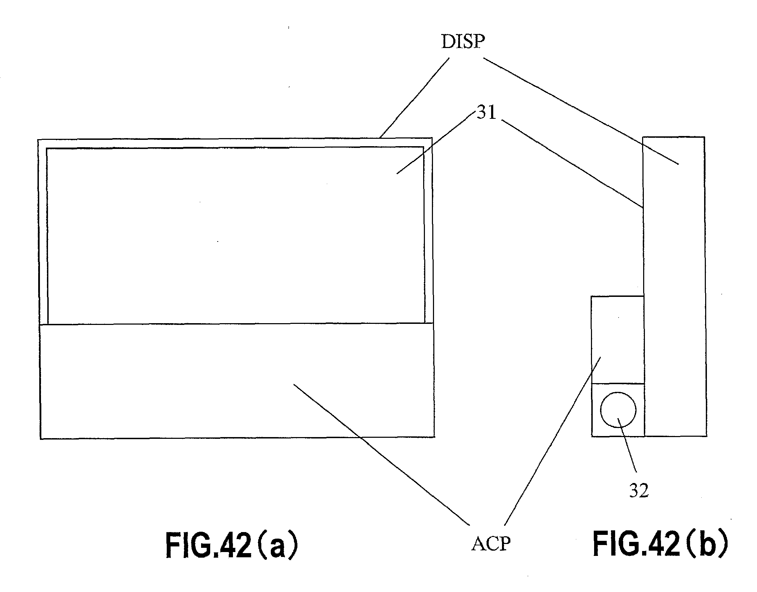

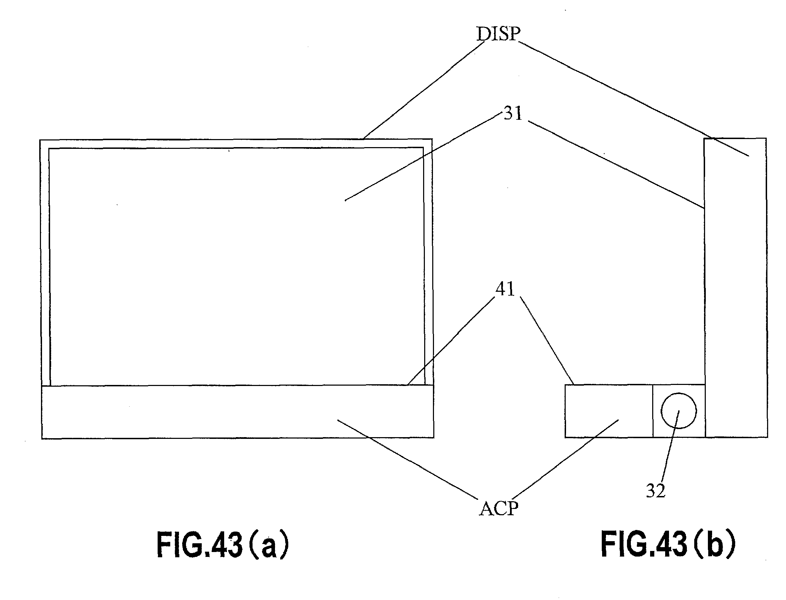

FIGS. 42 and 43 are front views and side views of the display panel and the operation panel constituting an onboard electronic apparatus, etc. according to the fourth embodiment. FIG. 42 shows the front view (FIG. 42 (a) ) and the side view (FIG. 42 (b)) of the operation panel ACP being in a closed state relative to the display panel DISP, while FIG. 43 shows the front view (FIG. 43 (a)) and the side view (FIG. 43 (b)) of the operation panel ACP being in an open state relative to the display panel DISP.

As shown in FIG. 42, in the case of the closed state of the operation panel ACP, the operation panel ACP has a smaller size than the display area of a display 31 of the display panel DISP, and covers a portion of the display area of display 31 of the display panel DISP. Therefore, in the closed state of the operation panel ACP, the display area portion covered by the operation panel ACP is visually unrecognizable by the user, and accordingly, information cannot be displayed thereon. Meanwhile, the display area portion of display 31 not covered by the operation panel ACP is visually recognizable by the user even when the operation panel ACP is in the closed state, and accordingly, information can be displayed thereon.

When operation panel ACP is moved, throughmotor drive, to the position of 90 degrees rotated from display 31 of the display panel DISP, and shifted to the open state, the entire display area of display 31 of the display panel DISP becomes visually recognizable, thereby being shifted to a state in which an operation on operation panel face 41 of the operation panel ACP can be made. As shown in FIG. 43, the angle of the operation panel ACP becoming the open state is not fixed to 90 degrees, and instead, an arbitrary angle is settable based on a user taste. Typically, it may possibly be rotatable to an arbitrary angle exceeding 90 degrees (for example, 180 maximum). Additionally, a rotation axis 32, being fixed to the display panel DISP, is intended to detect the position of the operation panel ACP.

The angle of the operation panel ACP relative to display 31 can be detected by part of, for example, a linear sensor of a sliding variable resistor which is incorporated in the operation panel ACP. The non-illustrated computer control part obtains a rotation angle of the operation panel ACP, based on the output voltage of the linear sensor. When the electronic apparatus is switched from an OFF state to an ON state, first, the operation panel ACP is rotated from 0 degree to 90 degrees, that is, a default open position, and on reaching 90 degrees, the rotation of the operation panel ACP is halted. Further, when the operation panel ACP is to be rotated to an arbitrary angle exceeding 90 degrees, the operation panel ACP is further rotated to a desired open position by a predetermined operation, at which a rotation halt operation is performed, and the open position of interest is stored into, for example, a memory, so that the rotation is performed automatically to the above-mentioned open position from the next time. Also, it may be possible that, through the input of a desired angle, the operation panel ACP be rotated to the above input angle. The computer control part is configured of a CPU and a memory, and the present invention is realized by executing a control program of the present embodiment, in regard to the above-mentioned position detection control and the display control described later.

On operation panel face 41 of the operation panel ACP, an operation key is provided. The operation key may be configured of a push button or the like, or alternatively, operation panel face 41 is configured of a touch panel display, in which the operation key is displayed on the touch panel display, so as to be operable by touching the display portion of the operation key. Also, as will be described later, display 31 of the display panel DISP may be a touch panel display.

Further, the non-illustrated computer control part functions as a display control part, so as to detect the position of the operation panel ACP, and switch the display content to be displayed on display 31 of the display panel DISP depending on the open state or the closed state of the operation panel ACP. Hereafter, a typical example of switching the display content will be described.

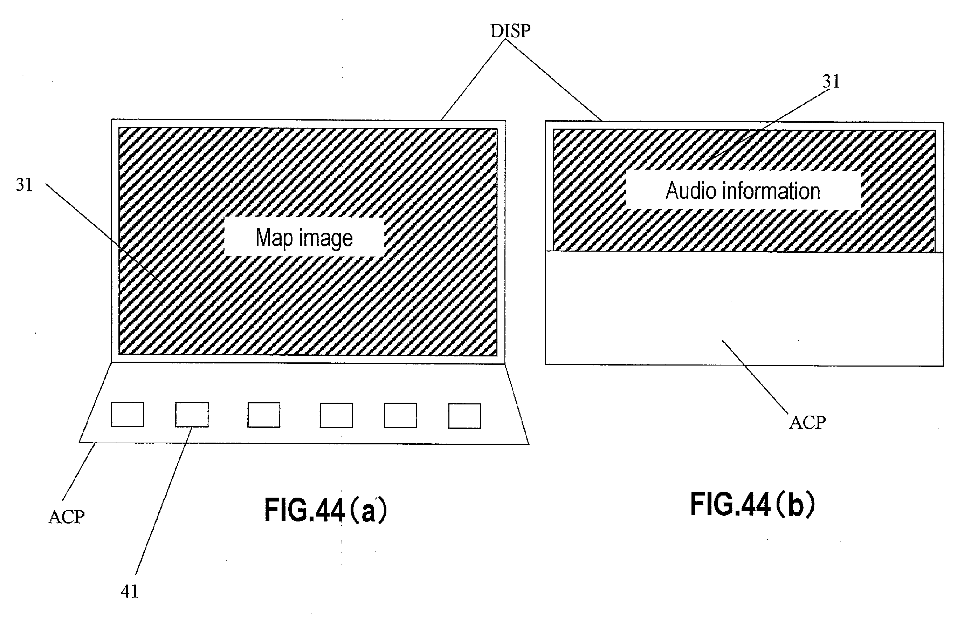

FIG. 44 shows diagrams explaining a first example of switching the display content according to the fourth embodiment. In the first example, according to the open or the closed state of the operation panel ACP, information related to a first function provided in the electronic apparatus and information related to a second function are switched. For example, by use of the navigation function of the electronic apparatus, when using an audio function such as music CD and radio while displaying a map image on display 31, in the open state shown in FIG. 44 (a) , the map image in the navigation function is displayed on the entire display area (oblique line portion) of display 31. Meanwhile, in the closed state shown in FIG. 44 (b) , audio information in the audio function is displayed on an area (oblique line area) in the display area of display 31, which is not covered by the operation panel ACP. The audio information includes, for example, a radio station name, a frequency, etc. in case of listening to the radio, and a music number, a music title, etc. in case of the music CD. Since the map image in the navigation function includes relatively large information quantity, when the display area of display 31 is limited because of the closed state of the operation panel ACP, there is a possible risk that necessary information cannot be displayed sufficiently. In such a case, when the operation panel ACP is forcibly closed by a user operation, there is displayed other information in regard to another function of the electronic apparatus which can be displayed on the limited display area, as in the example shown in FIG. 44.

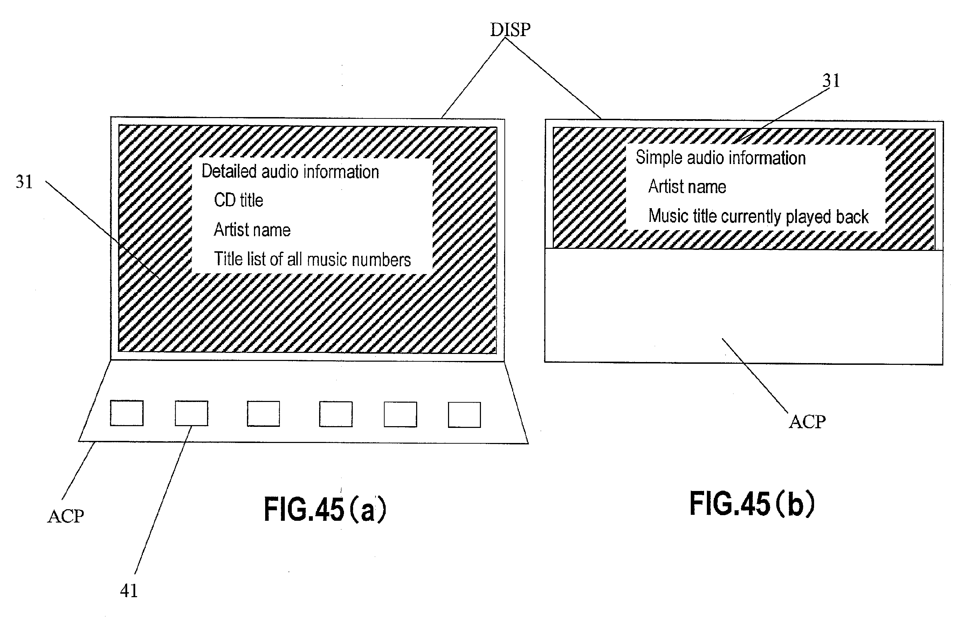

FIG. 45 shows diagrams explaining a second example of switching the display content according to the fourth embodiment. In the second example, according to the open state or the closed state of the operation panel ACP, switching between detailed information and simple information is performed. For example, as shown in FIG. 45 (a) , when a music CD is playedbackusing the audio function of the electronic apparatus, and when the operation panel ACP is in the open state, it is possible to display on the entire area of display 31, and accordingly, a detailed display is made using the entire display area (oblique line portion), including displays of music title name, artist name, title list of the entire music numbers stored in the music CD, and further, the title currently in playback among the music numbers so as to be identifiable. On the other hand, as shown in FIG. 45(b), in the closed state of the operation panel ACP, since the display area of display 31 is limited, there is made a simple display, only including displays of CD title name, artist name, and music title currently played back, on the area (oblique line portion) not covered by the operation panel ACP in the display area of display 31. When the navigation function is being used, information items including, for example, map image, distance to the destination, present location, are displayed as detailed information, while information of, for example, only a distance to the destination and a present location are displayed.

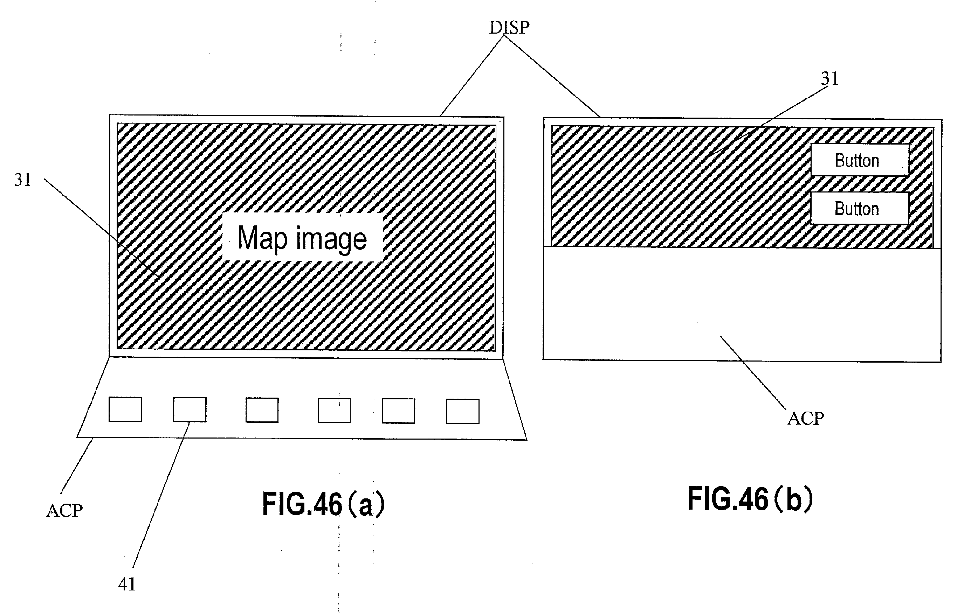

FIG. 46 shows diagrams explaining a third example of switching the display content according to the fourth embodiment. In the third example, according to the open state or the closed state of the operation panel ACP, there is performed switching of display/non-display of buttons corresponding to operation keys provided on operation panel face 41 of the operation panel ACP. In the present example, display 31 of the displaypanel DISP is a touch panel display. The touchpanel display is a display having an input function (touch panel function) enabling a predetermined operation by directly touching a screen (display) , on which pictures and characters are displayed, with a finger, a pen, or the like. For example, as shown in FIG. 46 (a) , in case of the open state of the operation panel ACP, the operation keys on operation panel 41 of the operation panel ACP is operable, and therefore buttons are not displayed on display 31, and for example, a map image is displayed on the entire display area (oblique line portion). On the other hand, when the operation panel ACP becomes a closed state, it becomes unable to use the operation keys on operation panel face 41 of the operation panel ACP, and therefore, the buttons corresponding to the operation keys on operation panel face 41 are displayed on the area which is not covered by the operation panel ACP in the display area of display 31. With this, even when the operation panel ACP becomes the closed state, a variety of operations can be performed.

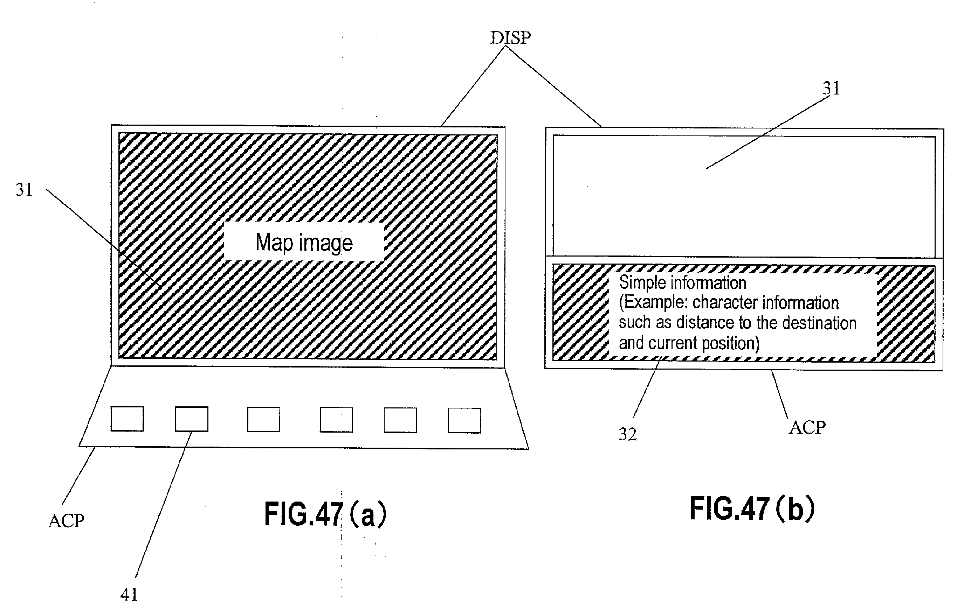

FIG. 47 shows diagrams explaining a fourth example of switching the display content according to the fourth embodiment. In the fourth example, a sub-display 12 is provided on the back face of operation panel face 41 of the operation panel ACP. Sub-display 12 becomes visually unrecognizable in case of the open state of the operation panel ACP, but becomes visually recognizable in the closed state of the operation panel ACP, because of facing in the front direction.

As shown in FIG. 47 (a), for example, in case of using the navigation function, and the operation panel ACP is in the open state, a map image, etc. are displayed on the entire display area (oblique line portion) of display 31 of the display panel DISP, as detail information, and the operation keys on operation panel 41 of the operation panel ACP are operable. Then, as shown in FIG. 47(b), when the operation panel ACP becomes the closed state, the display area of display 31 is limited, and accordingly, the map image display is suspended, and simple information in regard to the navigation function is displayed on the display area (oblique line portion) of sub-display 12. The simple information is character information or the like which is minimally necessary, such as a distance to the destination and a present location, as described earlier. Additionally, on display 31 of the display panel DISP in which the map image is not displayed, information related to other functions, such as audio information and clock information, is displayed in the visually recognizable area (that is, the area not covered by the operation panel ACP in the display area of display 31), similarly to the first example shown in FIG. 3.

Further, when voice guidance and minimally necessary information are sufficient in regard to the navigation function, and when it is desired to use display 31 for displaying audio information, it becomes possible to display the audio information while using the navigation function, by shifting the operation panel ACP into the closed state. If display 31 is a touch panel display, audio operation also becomes possible by displaying audio operation buttons on display 31. Additionally, in the closed state of the operation panel ACP, it may not be necessary to display on display 31.

Also, it may be possible to display still image data and moving image data stored in advance in the memory part of the electronic apparatus.

### (Fifth embodiment)

In the fifth embodiment, an electronic apparatus such as an onboard apparatus having a plurality of touch panel displays is exemplified. As one example, the electronic apparatus includes a main body portion, a display panel provided on the above main body portion, and an operation panel which is operated in such a manner as can be opened and closed relative to the above display panel, and a first touch panel is disposed on the front face portion of the display panel, while a second touch panel is provided on the operation panel, and the operation panel is attached to be rotationally movable relative to the display panel following the rotation of a predetermined rotation axis, and is operated so as to be opened and closed relative to the first touch panel display, causing the second touch panel display to be opened and closed also, and display by part of the two touch panel displays becomes possible in the open state of the operation panel.

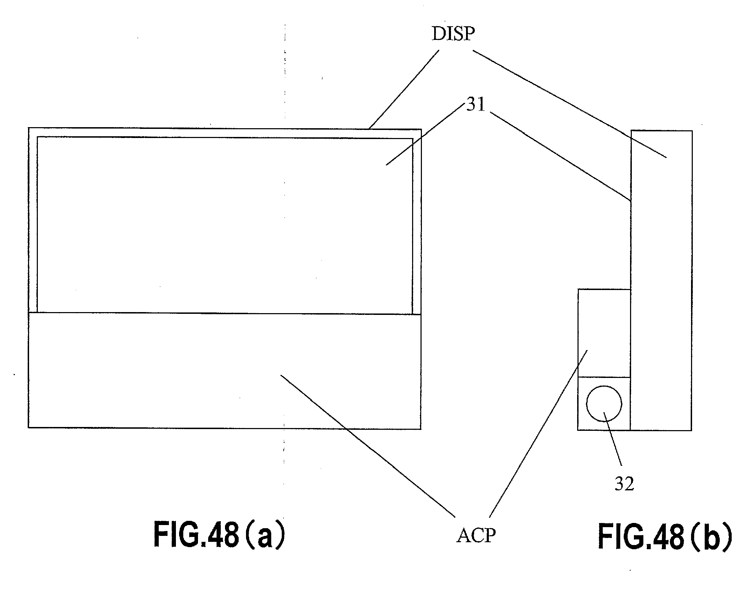

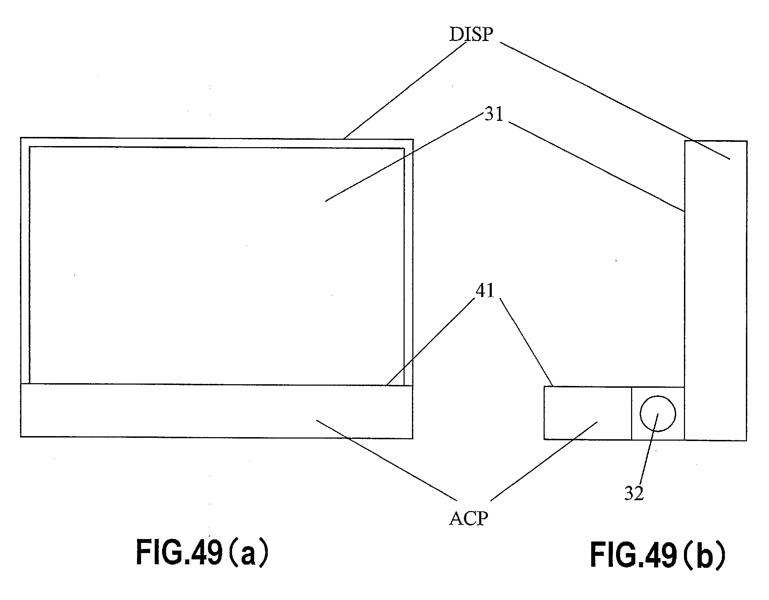

FIGS. 48 and 49 show front views and side views of the display panel and the operation panel constituting the electronic apparatus according to the fifth embodiment. FIG. 48 shows the front view (FIG. 48 (a)) and the side view (FIG. 48 (b)) when the operation panel is in the closed state relative to the display panel DISP, while FIG. 49 shows the front view (FIG. 49 (a) ) and the side view (FIG. 49 (b)) when the operation panel ACP is in the open state relative to the display panel DISP.

In an OFF state in which the electronic apparatus is not in use, the operation panel ACP having the second touch panel display is in a closed state (the angle of the display panel DISP relative to a first touch panel display 31 is 0 degree) , thereby covering at least a portion of the first touch panel display 31 of the display panel DISP. In the above state, because of being closed, the second touch panel display, which is an operation panel face 41 of the operation panel ACP, is not shown in FIG. 48. At the time of an ON state, the operation panel ACP is moved, through motor drive, to the position of, for example, 90 degrees rotated from display 31 of the display panel DISP, thereby becoming an open state in which the second touch panel display (operation panel face) 41 becomes visually recognizable and operable by the user. The angle of the operation panel ACP becoming the open state is not fixed to 90 degrees as shown in FIG. 49, and an arbitrary angle may be settable based on a user taste. Typically, the operation panel ACP may be rotatable to an arbitrary angle exceeding 90 degrees (for example, 180 degrees maximum). Additionally, a rotation axis 32, being fixed to the display panel DISP, is intended to detect the position of the operation panel ACP.

The angle of the operation panel ACP from the first touch panel display 31 can be detected by part of a linear sensor, which is, for example, a sliding variable resistor, incorporated in the operation panel ACP. The non-illustrated computer control part obtains a rotation angle of the operation panel ACP, based on the output voltage of the linear sensor. When the electronic apparatus is switched from an OFF state to an ON state, first, the operation panel ACP is rotated from 0 degree to 90 degrees, which is a default open position, and on reaching 90 degrees, the rotation of the operation panel ACP is halted. Further, when the operation panel ACP is to be rotated to an arbitrary angle exceeding 90 degrees, the operation panel ACP is further rotated to a desired open position through a predetermined operation, at which a rotation halt operation is performed, and the above open position is stored into, for example, a memory, so that the rotation is performed automatically to the above-mentioned open position from the next time. Also, by inputting a desired angle, it may be possible to rotate the operation panel ACP to the above input angle.

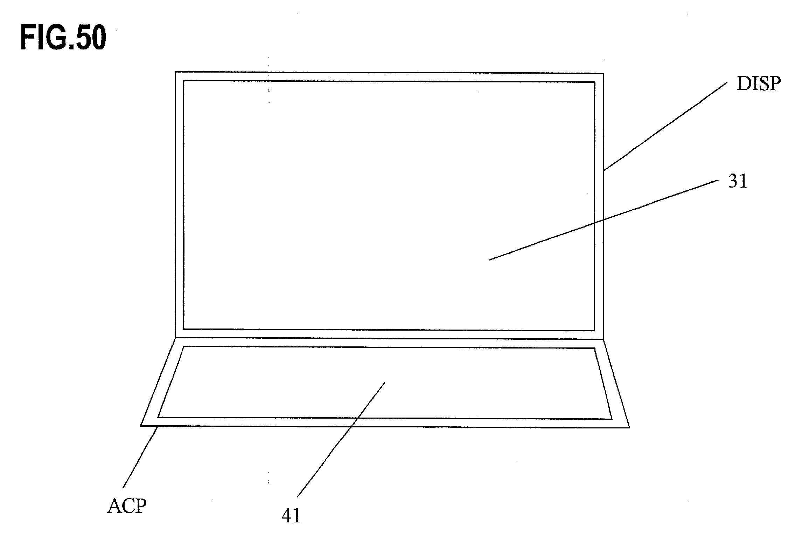

FIG. 50 shows a diagram schematically illustrating two touch panel displays of the electronic apparatus when the operation panel ACP is in an open state. FIG. 50 corresponds to the open state shown in FIG. 49, and in the open state of the operation panel ACP, the electronic apparatus can display using two screens provided on the second touch panel display 41 of the operation panel ACP as well as on the first touch panel display 31 of the display panel DISP, by which a wider display area can be secured, and further, by configuring both two screens with touch panel displays, the operability can be improved.

Further, it may be possible to have a configuration in which still another touch panel display (a third touch panel display) 49 is provided on the opposite face of the second touch panel display (operation panel face) 41 of the operation panel ACP. Namely, the touch panel displays are provided on both faces of the operation panel ACP, and when the operation panel ACP is in the closed state, the third touch panel display 49 of the operation panel ACP becomes visually recognizable and operable.

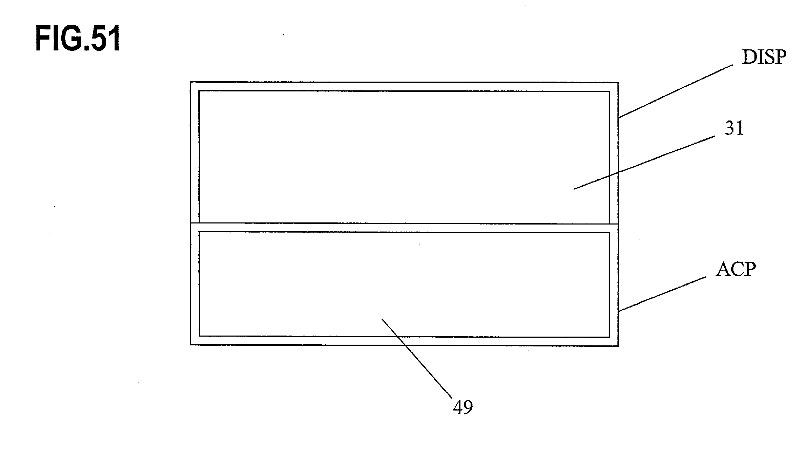

FIG. 51 shows a diagram schematically illustrating two touch panel displays of the electronic apparatus, when the operation panel ACP is in a closed state. FIG. 51 corresponds to the closed state shown in FIG. 48, and in the closed state of the operation panel ACP, display by part of the third touch panel display 49 of the operation panel ACP can be made even in the state that the operation panel ACP covers at least a portion of the first touch panel display 31 of the display panel DISP, and accordingly, good operability using the touch panel displays is maintained.

By introducing the touch panel display for the display of the operation panel ACP, it is possible to displaybuttons and the like on the touch panel displays (the second touch panel display 41 and the third touch panel display 49) of the operation panel ACP. Hereafter, typical examples of displaying on the touch panel displays of the operation panel ACP will be described.

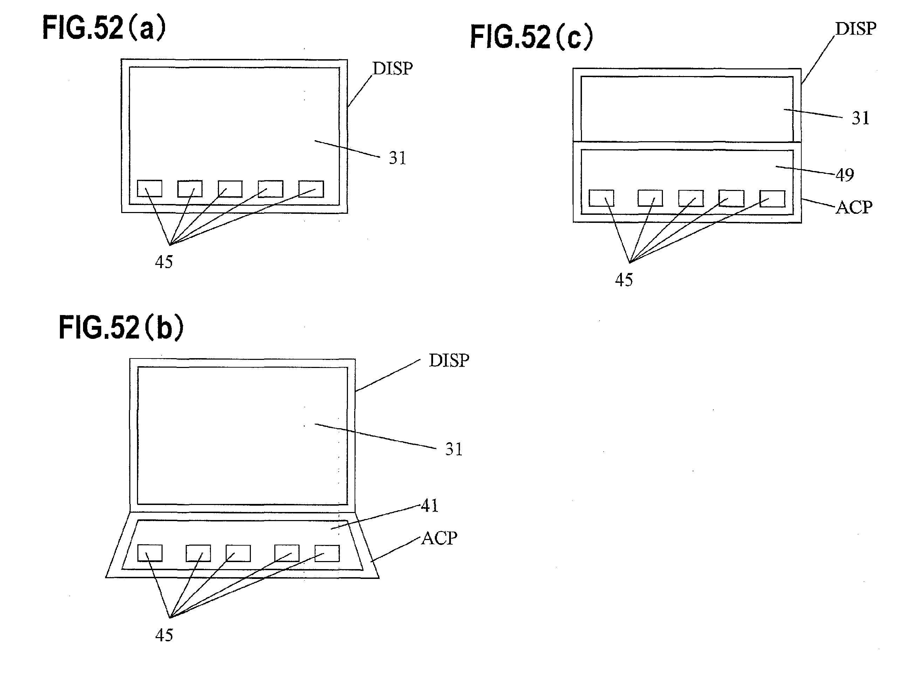

FIG. 52 shows diagrams illustrating a first display example on the touch panel displays of the operation panel ACP according to the fifth embodiment. In FIG. 52, a case of displaying a map through the navigation function of the electronic apparatus is exemplified. As shown in FIG. 52 (a), in case the operation panel ACP having a touch panel display is not provided, operation buttons 45 are displayed on the first touch panel display 31, together with a map (not shown) on the first touch panel display 31 of the display panel DISP. This produces a limited map display area. Meanwhile, according to the fifth embodiment, the second touch panel display 41 and the third touch panel display 49 are provided on the operation panel ACP, and buttons 45 are displayed on the display which is visually recognizable according to the open state or the closed state of the operation panel ACP. With this, the map display area to be displayed on the first touch panel display 31 of the display panel DISP canbe expanded. FIG. 52 (b) illustrates a state that buttons 45 are displayed on the second touch panel display 41 of the operation panel ACP in case of the open state of the operation panel ACP, while FIG. 52 (c) illustrates a state that buttons 45 are displayed on the third touch panel display 49 of the operation panel ACP, in case of the closed state of the operation panel ACP. In FIG. 52 (c), a portion of the display on the first touch panel display 31, on which the map is displayed, is hidden by the operation panel ACP, but it may be possible to forcibly put the operation panel ACP into the closed state through a predetermined operation, even during using the navigation function, etc. The reason is that, when it is difficult to operate other operation buttons such as air conditioner buttons on the vehicle console in the open state of the operation panel ACP, there is a possible case that the operation panel ACP is desired to be tentatively put into the closed state. By providing the third touch panel display, operation on the electronic apparatus becomes possible even in the closed state, which leads to improved operability.

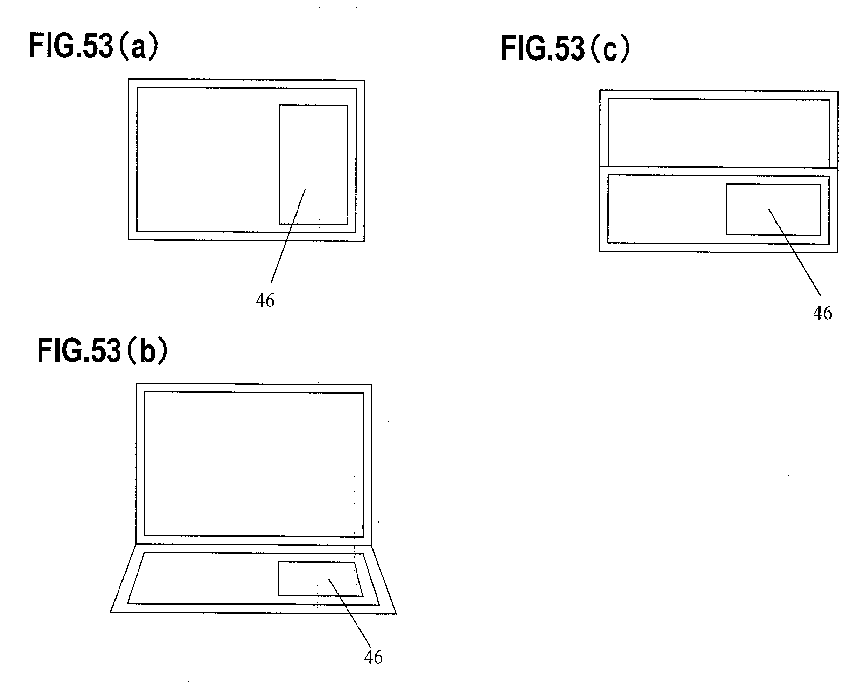

FIG. 53 shows diagrams illustrating a second display example on the touch panel display of the operation panel ACP according to the fifth embodiment. In FIG. 53, a case of map display by the navigation function of the electronic apparatus is exemplified, similar to FIG. 52. As shown in FIG. 53(a), when the operation panel ACP having a touch panel display is not provided, on the first touch panel display 31 of the display panel DISP, guidance information 46 leading to the destination is displayed on the first touch panel display 31, together with a map (not shown). Guidance information 46 includes traffic information, distance and time to the destination, which are mainly character information. For the purpose of displaying the above guidance information 46, the map display area on the first touch panel display 31 is restricted. Meanwhile, according to the fifth embodiment, the second touch panel display 41 and the third touch panel display 49 are provided on the operation panel ACP, similarly to FIG. 52, and guidance information 46 is displayed on either one of the above touch panel displays. With this, it is possible to expand the map display area displayed on the first touch panel display 31 of the display panel DISP. FIG. 53(b) illustrates a state that guidance information 46 is displayed on the second touch panel display 41 of the operation panel ACP when the operation panel ACP is in the open state, while FIG. 53 (c) illustrates a state that the guidance information is displayed on the third touch panel display 49 of the operation panel ACP when the operation panel ACP is in the closed state, and switching the display of the both is similar to the case of FIG. 52.

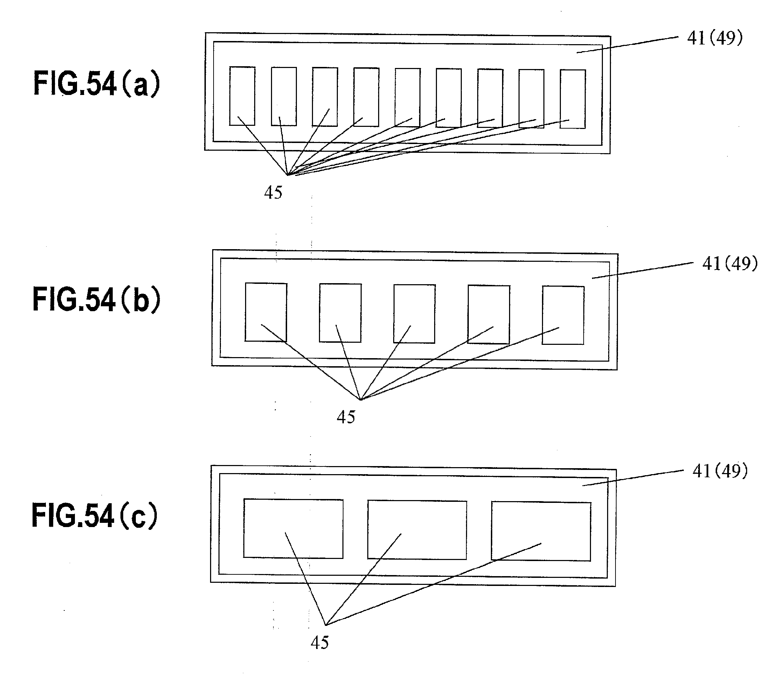

FIG. 54 shows diagrams illustrating a first display example of buttons 45 displayed on touch panel display 41 (or 49) of the operation panel ACP, according to the fifth embodiment. The display size of the buttons are modified depending on the number of buttons to be displayed, and based on the display area of the touch panel display, the above size is set to a size capable of displaying. The display size of one button can be calculated from the display area size of the touch panel display, the number of buttons necessary for displaying, intervals between the operation buttons, and so on, and for example, so as to be disposed, for example, with a uniform layout on the touch panel display. FIGS. 54(a), (b) and (c) illustrates examples in case of the number of buttons to be displayed is 9, 5 and 3, respectively.

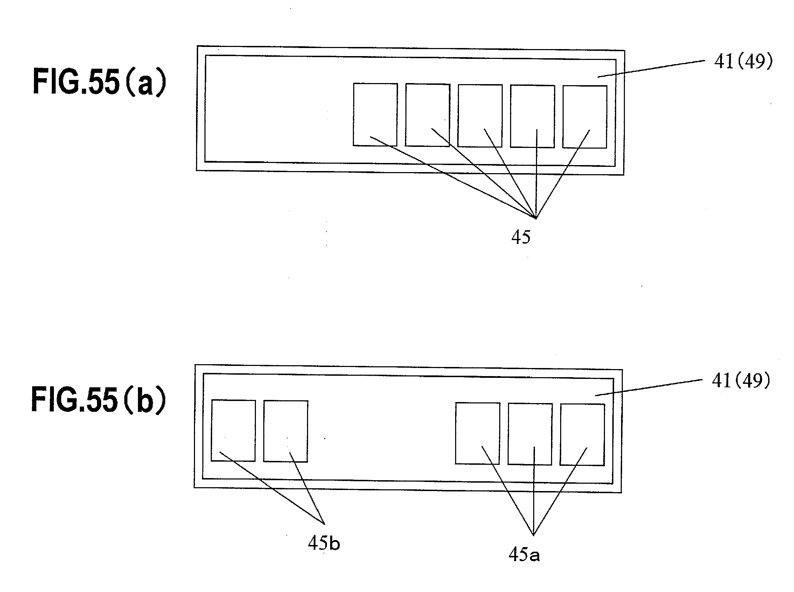

FIG. 55 shows diagrams illustrating a second display example of the buttons displayed on the touch panel display of the operation panel ACP, according to the fifth embodiment. The layout of the buttons 45 to be displayed may be modifiable. For example, as shown in FIG. 55(a), buttons 45 may be disposed on the right side of the drawing. Because buttons 45 are disposed in the position near the driver, driver operability is improved. Also, as shown in FIG. 55 (b) , it may be possible to dispose a portion of buttons 45a to be shiftedon the right side, and the remaining buttons 45b to be shifted on the left side. For example, by disposing the buttons to be operated by a passenger on the passenger seat, the operability of the passenger on the passenger seat is improved. Needless to say, it may be possible to uniformly dispose in the display area, as shown in FIG. 54.

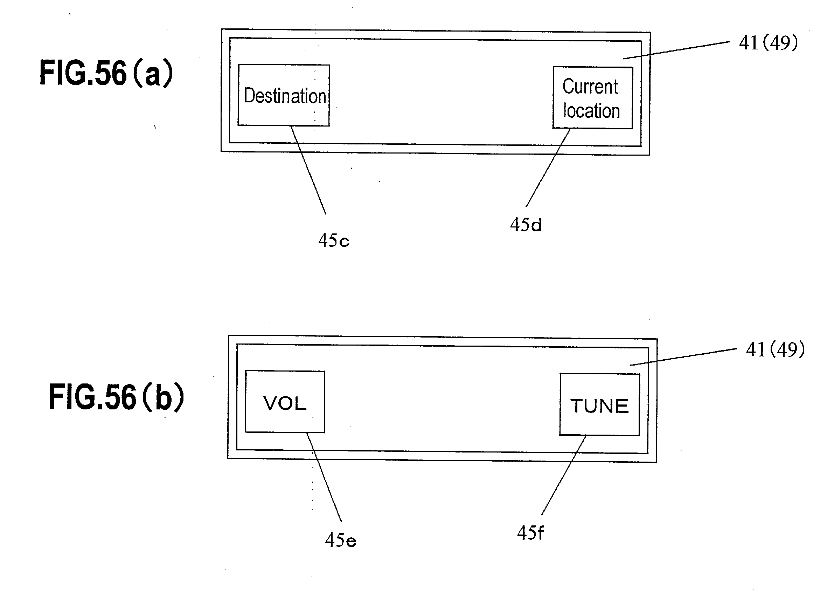

FIG. 56 shows diagrams illustrating a third display example of the buttons displayed on the touch panel display of the operation panel ACP, according to the fifth embodiment. The electronic apparatus has a plurality of functions such as a map navigation function using GPS and an audio function including radio and CD. In case of FIG. 56, only buttons necessary for the function currently in use are displayed. For example, FIG. 56(a) illustrates a case of the map navigation function being in use, displaying only a button 45c for displaying the destination and a button 45d for displaying the current location which are necessary for the map navigation function. Also, FIG. 56(b) illustrates a case of the audio function (radio) being in use, displaying only a volume adjustment button 45e and a tuning (station search) button 45f which are necessary for the radio function. When the map navigation function is in use, the volume adjustment button 45e and the tuning button 45f are not displayed. Further, when the radio is in use, the destination display button 45c and the current location display button 45d are not displayed.

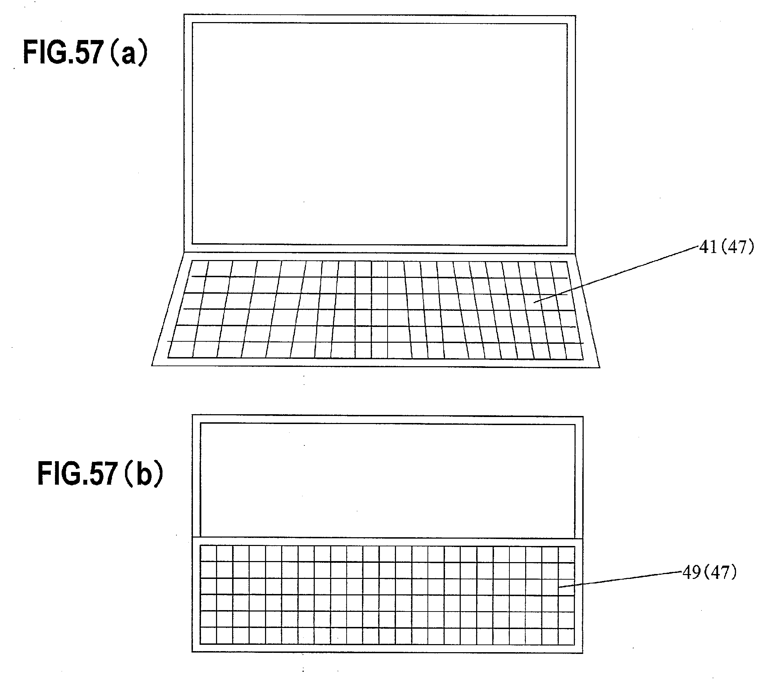

FIG. 57 shows diagrams illustrating a fourth display example of the buttons displayed on the touch panel display of the operation panel ACP according to the fifth embodiment. As shown in the figure, it may be possible to display a plurality of buttons 47 constituting a keyboard for inputting characters, on the second touch panel display 41 (FIG. 57 (a)) and the third touch panel display 49 (FIG. 57 (b)) of the operation panel ACP. In case the navigation function is in use, destination or the like may be input. Also, in case the Internet function is being used with a predetermined search site (portal site) displayed on the first touch panel display 31, a search keyword may be input.

Additionally, when the electronic apparatus is in an OFF state and a variety of functions are not in use, it is not necessary to display the buttons on the touch panel display of the operation panel ACP, but in place thereof, predetermined image data such as photograph data, still image data and moving image data being registered beforehand may be displayed. When the operation panel ACP is in the open state, and the electronic apparatus is in the OFF state, the image data is displayed on the second touch panel display 41, while when the operation panel ACP is in the closed state and the electronic apparatus is in the OFF state, the image data is displayed on the third touch panel display 49. Also, when the operation panel ACP is in the open state, and the electronic apparatus is switched to the OFF state from the ON state in which any electronic apparatus function is in use, the operation panel ACP comes to the closed state after the lapse of a certain time. In the period that the operation panel ACP stays in the open state after the electronic apparatus is switched to the OFF state, the image data of the second touch panel display of the operation panel ACP is displayed, and when the operation panel comes to the closed state from the open state, the display on the second touch panel display is halted, and in place thereof, the image data is displayed on the third touch panel display of the operation panel ACP.

Further, because of displaying TV images and map images, the first touch panel display 31 requires high resolution of a dot matrix type or the like. Meanwhile, the second touch panel display 41 and the third touch panel display 49 may have low resolution in case of being mainly used for displaying buttons, and in case of displaying certain patterns only, it is not necessary to be formed of dot matrix type, and any type will do as long as the patterns can be displayed. However, as to the second touch panel display 41 and the third touch panel display 49 also, a high-resolution configuration makes it possible to display detailed information such as map images.

The electronic apparatus according to the present invention may be configured with appropriate combinations of the first embodiment through the fifth embodiment described above, For example, the electronic apparatus may be configured of the first embodiment combined with the second embodiment, and may also be configured of the first embodiment with the third embodiment.

### INDUSTRIAL APPLICABILITY

As described above, according to the present invention, the size of the display panel DISP can be maximized and also the tilt motion of the operation panel ACP axially supported on the lower end portion of the display panel DISP can be performed automatically, which can enhance user convenience.

## Claims

1. An electronic apparatus comprising:
a main body;
a display panel mounted on the front face portion of the main body in a tiltable manner to the main body;
an operation panel mounted on the display panel in a tiltable manner;
a tilt control part for controlling to tilt the display panel in response to a first tilt command, and to tilt the operation panel in response to a second tilt command; and
a memory part for storing tilt angle information of the operation panel corresponding to the tilt angle of the display panel,
wherein the tilt control part tilts the display panel in response to the first tilt command, and also tilts the operation panel based on the tilt angle information of the operation panel stored in the memory part.

2. The electronic apparatus according to claim 1,
wherein, when the operation panel is tilted in response to the second tilt command, the tilt control part updates the tilt angle information stored in the memory part.

3. The electronic apparatus according to claim 1,
wherein, in response to the first tilt command of the direction to expose the front face of the main body, the tilt control part controls to tilt the operation panel after tilting the display panel.

4. The electronic apparatus according to claim 1,
wherein, in response to the first tilt command in the direction to close the front face of the main body, the tilt control part controls to tilt the display panel after tilting the operation panel.

5. The electronic apparatus according to claim 1,
wherein, in response to the first tilt command, the tilt control part controls to tilt the display panel after tilting the operation panel to a reference angle.

6. The electronic apparatus according to claim 1,
wherein, when the tilt motion of the display panel in response to the first tilt command or the tilt motion of the operation panel is not completed within a certain time, the tilt control part controls to inhibit the tilt motion of the display panel or the operation panel.

7. The electronic apparatus according to claim 1,
wherein the tilt control part controls to invalidate an input operated from the operation panel, during the tilt motion of the display panel or the tilt motion of the operation panel.

8. The electronic apparatus according to claim 1,
wherein, on detecting the depression of an operation button provided on the operation panel, the tilt control part tilts the operation panel in such a way as to press back the operation panel in response to the depression of the operation button.

9. The electronic apparatus according to claim 1,
wherein, when speed information is input from a speed detection part for detecting the speed information of the vehicle on which the electronic apparatus is mounted, and on detecting the acceleration of the vehicle from the input speed information, the tilt control part tilts the operation panel in the direction of moving closer to the front face of the display panel, while on detecting the deceleration of the vehicle, tilts the operation panel in the direction of moving away from the front face of the display panel.

10. The electronic apparatus according to claim 1,
wherein the tilt control part detects an inclination of the electronic apparatus, and controls to tilt the operation panel based on the detected inclination.

11. The electronic apparatus according to claim 1, further comprising:
a moving part for moving according to the tilt motion of the operation panel; and
a detecting part for detecting the tilt angle of the operation panel according to the moving amount of the moving part,
wherein, in a first tilt angle range of the operation panel, the moving part moves by a first moving amount per unit angle of the operation panel, while in a second tilt angle range of the operation panel, moves by a second moving amount per unit angle of the operation panel, different from the first moving amount.

12. The electronic apparatus according to claim 11,
wherein the second moving amount is greater than the first moving amount.

13. The electronic apparatus according to claim 11, further comprising:
a rotation axis fixed to the display panel; and
a spiral-shaped groove provided on the rotation axis,
wherein the operation panel is mounted on the display panel rotatably to the display panel, following the rotation of the rotation axis,
the spiral-shaped groove is formed to move by the first moving amount in the first tilt angle range of the operation panel, and to move by the second moving amount in the second tilt angle range of the operation panel, and engaged with the moving part, and
the moving part moves in the axial line direction of the rotation axis, following the rotation of the rotation axis.

14. The electronic apparatus according to claim 1, further comprising:
a moving part for moving according to the tilt motion of the operation panel; and
a detecting part for detecting the tilt angle of the operation panel according to the moving amount of the moving part,
wherein the moving part has a different proportion of the moving amount to the tilt motion of the operation panel, depending on the tilt angle range of the operation panel.
